(19) **Europäisches Patentamt / European Patent Office / Office européen des brevets**

(11) **EP 4 407 957 B1**

(12) **EUROPEAN PATENT SPECIFICATION**

(45) Date of publication and mention
of the grant of the patent:
**25.03.2026 Bulletin 2026/13**

(21) Application number: **23758901.5**

(22) Date of filing: **09.01.2023**

(51) International Patent Classification (IPC):
*H04L 67/568* (2022.01)     *H04L 67/10* (2022.01)
*H04L 67/12* (2022.01)     *H04L 67/62* (2022.01)

(52) Cooperative Patent Classification (CPC):
**H04L 47/62; H04L 47/31; H04L 67/10; H04L 67/12; H04L 67/568**

(86) International application number:
**PCT/CN2023/071183**

(87) International publication number:
**WO 2023/160276 (31.08.2023 Gazette 2023/35)**

(54) **DATA PROCESSING METHOD AND APPARATUS, COMPUTER DEVICE AND READABLE STORAGE MEDIUM**

DATENVERARBEITUNGSVERFAHREN UND -VORRICHTUNG, COMPUTERVORRICHTUNG UND LESBARES SPEICHERMEDIUM

PROCÉDÉ ET APPAREIL DE TRAITEMENT DE DONNÉES, DISPOSITIF INFORMATIQUE ET SUPPORT DE STOCKAGE LISIBLE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.02.2022 CN 202210180680**

(43) Date of publication of application:
**31.07.2024 Bulletin 2024/31**

(73) Proprietor: **Tencent Technology (Shenzhen) Company Limited**
**Shenzhen, Guangdong, 518057 (CN)**

(72) Inventors:
• **HU, Can**
**Shenzhen, Guangdong 518057 (CN)**
• **ZHANG, Yujie**
**Shenzhen, Guangdong 518057 (CN)**
• **WANG, Lei**
**Shenzhen, Guangdong 518057 (CN)**

(74) Representative: **Nederlandsch Octrooibureau**
**P.O. Box 29720**
**2502 LS The Hague (NL)**

(56) References cited:
CN-A- 106 878 966     CN-A- 110 493 116
CN-A- 110 493 116     CN-A- 110 764 936
CN-A- 111 694 766     CN-A- 113 965 482
CN-A- 114 567 674     JP-A- 2009 284 085

**EP 4 407 957 B1**

**EP 4 407 957 B1**

**Description**

FIELD OF THE TECHNOLOGY

The present disclosure relates to the field of computer technologies, and in particular, to a data processing method and apparatus, a computer device, and a readable storage medium.

BACKGROUND OF THE DISCLOSURE

Different from a mobile phone, a personal computer, and the like, communication between an in-vehicle central control system and the outside world is limited by a network environment, a memory, a disk space, and a processing capability, and there is often a lack of access to enough information to deal with functional abnormalities.
CN111694766A recites a method for transmitting vehicle state information, which includes a vehicle-mounted device collects full amount of CAN (Controller Area Network) data, compresses the data and uploads the compressed data to a cloud server. When the network link is unstable or data uploading is failed, the data is written into a disk file to avoid the CAN data being lost.
CN110493116A recites a method for transmitting IoV (Internet of Vehicles) data, which uses using both an instant messaging protocol channel and a network communication protocol channel for uploading data. When the transmission through the network communication protocol channel is failed when both of the channels are disconnected, the data packet cached in the memory is encrypted, and the encrypted data packet is written into a corresponding data file.

SUMMARY

The present invention is defined by the appended claims. Embodiments of the present disclosure provide a data processing method and apparatus, a computer device, and a readable storage medium, to improve utilization of network resources, and increase a success rate of uploading data packets.
Embodiments of the present disclosure provide a data processing method, executable by an in-vehicle central control device, a database and a cache queue being arranged in the in-vehicle central control device, and the method including:

polling data packets in the database, to obtain a to-be-added data packet set, and adding the to-be-added data packet set to the cache queue;
polling the cache queue, to obtain a to-be-uploaded data packet set, and uploading the to-be-uploaded data packet set through a wireless communication connection of the in-vehicle central control device;
storing, in response to that a first data packet of the to-be-uploaded data packet set meets a continuous uploading failure condition indicating a failure occurring during continuous uploading of the first data packet, the first data packet to the database; and
deleting, in response to a second data packet of the to-be-uploaded data packet set being successfully uploaded to a server, and the second data packet having been existing in the database, the second data packet from the database.

Embodiments of the present disclosure provide a data processing apparatus, including:

a database polling module, configured to poll data packets in the database, to obtain a to-be-added data packet set, and add the to-be-added data packet set to the cache queue;
a queue polling module, configured to poll the cache queue, to obtain a to-be-uploaded data packet set, and upload the to-be-uploaded data packet set through a wireless communication connection of the in-vehicle central control device;
a data adding module, configured to add, in response to that a first data packet of the to-be-uploaded data packet set meets a continuous uploading failure condition indicating a failure occurring during continuous uploading of the first data packet, the first data packet to the database; and
a data deleting module, configured to delete, in response to a second data packet of the to-be-uploaded data packet set being successfully uploaded to a server, and the second data packet having been existing in the database, the second data packet from the database.

Embodiments of the present disclosure provide a computer device, including: a processor and a memory, where the processor is connected to the memory, the memory is configured to store a computer program; and when the computer program is executed by the processor, the computer device executes the method provided in embodiments of the present disclosure.
Embodiments of the present disclosure provide a computer-readable medium, storing a computer program, the computer program being applicable to be loaded and executed by a processor, to enable a computer device having the processor to perform the method provided in embodiments of the present disclosure.

Embodiments of the present disclosure provide a computer program product or a computer program. The computer program product or the computer program includes computer instructions, and the computer instructions are stored in a computer-readable storage medium. A processor of a computer device reads the computer instructions from the computer-readable storage medium, and executes the computer instructions, to enable the computer device to perform the method in embodiments of the present disclosure.

In embodiments of the present disclosure, the computer device may poll data packets in the database, to obtain a to-be-added data packet set, add the to-be-added data packet set to the cache queue, then poll the cache queue, to obtain a to-be-uploaded data packet set, and upload the to-be-uploaded data packet set. The computer device may add a first data packet to the database in response to that the first data packet of the to-be-uploaded data packet set meets a continuous uploading failure condition; and the computer device may delete a second data packet from the database in response to the second data packet of the to-be-uploaded data packet set being successfully uploaded to a server, and the second data packet having been existing in the database,. It may be learnt that by storing a to-be-uploaded data packet in the cache queue, the to-be-uploaded data packet in the to-be-uploaded data packet set may be directly read from the memory, to avoid reading data packets from a disk, thereby improving efficiency of uploading data packets. In addition, when uploading processing is performed on the data packets in the to-be-uploaded data packet set, uploading of the first data packet may be suspended in response to the first data packet in the to-be-uploaded data packet set meeting the continuous uploading failure condition, and the first data packet is then stored in the database, to avoid network resources from being repeatedly occupied when a network environment is not good. This may improve utilization of the network resources. When the network environment is subsequently improved, by re-polling the database, there is still a chance to successfully upload the first data packet, thereby improving a success rate of uploading the data packets.

BRIEF DESCRIPTION OF THE DRAWINGS

To describe the technical solutions of embodiments of the present disclosure or the related art more clearly, the following briefly introduces the accompanying drawings required for describing the embodiments or the related art. The accompanying drawings in the following description show merely some embodiments of the present disclosure, and a person of ordinary skill in the art may still derive other drawings from these accompanying drawings without creative efforts.

FIG. 1 is a schematic diagram of a structure of a network architecture according to an embodiment of the present disclosure.
FIG. 2 is a schematic diagram of a scenario for data exchange according to an embodiment of the present disclosure;
FIG. 3 is a schematic flowchart of a data processing method according to an embodiment of the present disclosure;
FIG. 4 is a schematic flowchart of data exchange according to an embodiment of the present disclosure;
FIG. 5 is a schematic flowchart of a data processing method according to an embodiment of the present disclosure;
FIG. 6 is a schematic flowchart of performing data reporting according to an embodiment of the present disclosure;
FIG. 7 is a schematic diagram of a structure of a data processing apparatus according to an embodiment of the present disclosure; and
FIG. 8 is a schematic diagram of a structure of a computer device according to an embodiment of the present disclosure.

DESCRIPTION OF EMBODIMENTS

The technical solutions in embodiments of the present disclosure are clearly and completely described below with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

A software development kit (SDK) refers to a set of development tools for building application software for a specific software package, a software framework, a hardware platform, an operating system, and the like. An application programming interface (API) refers to some predefined interfaces or functions in the SDK, or refers to an agreement between different components of a software system, which are configured to provide an application and a developer with a set of routines that may be accessed based on specific software or hardware without having to access a source code or understand details of an internal operating mechanism.

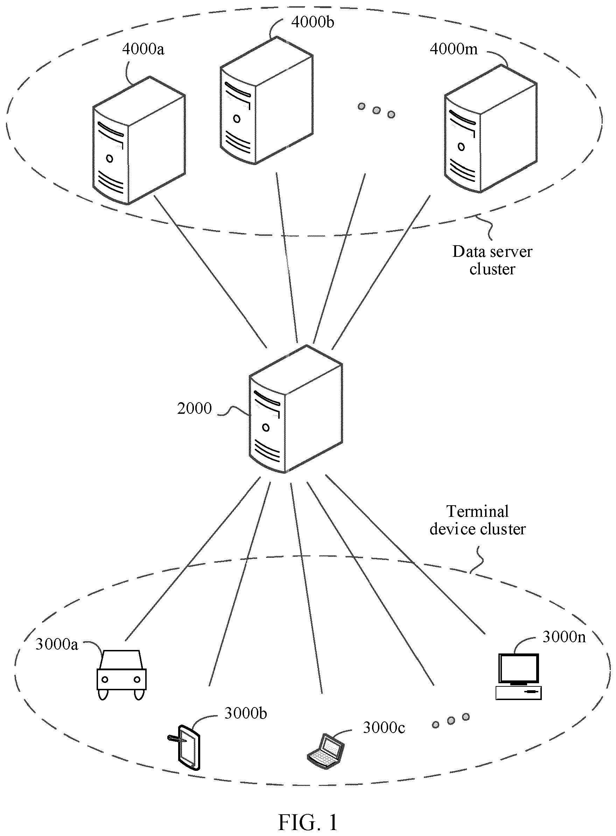

FIG. 1 is a schematic diagram of a structure of a network architecture according to an embodiment of the present disclosure. As shown in FIG. 1, the network architecture may include an access server 2000, a data server cluster, and a terminal device cluster. The terminal device cluster may specifically include one or more terminal devices, and the quantity of terminal devices in the terminal device cluster is not limited herein. As shown in FIG. 1, a plurality of terminal devices may specifically include a terminal device 3000a, a terminal device 3000b, a terminal device 3000c,..., and a terminal device 3000n; and the terminal device 3000a, the terminal device 3000b, the terminal device 3000c, ..., and the terminal device 3000n may be directly or indirectly connected to the access server 2000 in a wired or wireless communication manner, so that each terminal device may perform data exchange with the access server 2000 through the network connection.

Each terminal device in the terminal device cluster may include: smart terminals with data processing functions such as a smartphone, a tablet computer, a notebook computer, a desktop computer, a smart home appliance, a wearable device, an in-vehicle terminal (such as an in-vehicle central control device), a workshop testing terminal, and the like. It is to be understood that each terminal device in the terminal device cluster as shown in FIG. 1 may be integrated with an application client. When running in each terminal device, the application client may perform data exchange with the access server 2000 shown in FIG. 1. The application client may be an independent client or an embedded sub-client integrated in a client, which is not limited in the present disclosure.

Specifically, the application client may include clients with data processing functions such as a browser, an in-vehicle client, a smart home client, an entertainment client, a multimedia client (for example, a video client), a social client, an information client, and the like. It is to be understood that the in-vehicle terminal may be a smart terminal in a smart traffic scenario. The application client on the in-vehicle terminal may be the in-vehicle client. An operating system (OS) in the in-vehicle terminal may be an in-vehicle Linux OS or an in-vehicle Android OS. The in-vehicle Linux OS is a Linux operating system that runs on a vehicle, and the in-vehicle Android OS is an Android operating system that runs on the vehicle.

The access server 2000 may be an independent physical server, may also be a server cluster or distributed system composed of a plurality of physical servers, and may also be a cloud server providing basic cloud computing services, such as a cloud service, a cloud database, cloud computing, a cloud function, cloud storage, a network service, cloud communication, a middleware service, a domain name service, a security service, a CDN, and a big data and AI platform.

The data server cluster may include one or more data servers, and the quantity of data servers in the data server cluster is not limited herein. As shown in FIG. 1, a plurality of data servers may specifically include a data server 4000a, a data server 4000b, ..., and a data server 4000m. The data server 4000a, the data server 4000b, ..., and the data server 4000m may respectively perform direct or indirect network connection with the access server 2000 in a wired or wireless communication manner, so that each data server may perform data exchange with the access server 2000 through the network connection.

The data server in the data server cluster shown in FIG. 1 may be an independent physical server, may also be a server cluster or distributed system composed of a plurality of physical servers, and may also be a cloud server providing basic cloud computing services, such as a cloud service, a cloud database, cloud computing, a cloud function, cloud storage, a network service, cloud communication, a middleware service, a domain name service, a security service, a CDN, and a big data and AI platform.

The present disclosure may provide information support for an intelligent traffic system by uploading a data packet associated with the vehicle to the intelligent traffic system, to implement services such as traffic transportation and automatic driving. The intelligent traffic system (ITS), also referred to as an intelligent transportation system, effectively and comprehensively applies advanced science and technology (an information technology, a computer technology, a data communication technology, a sensor technology, an electronic control technology, an automatic control theory, operations research, artificial intelligence, and the like) to traffic transportation, service control, and vehicle manufacturing, to strengthen a connection between a vehicle, a road, and a user, thereby forming a comprehensive transportation system that ensures safety, improves efficiency, improves the environment, and saves energy.

The terminal device (also referred to as a target terminal device) described in all embodiments of the present disclosure including the embodiments of both the claims and the specification (hereinafter referred to as "all embodiments of the present disclosure") may be one terminal device selected from a plurality of terminal devices shown in FIG. 1. For example, in all embodiments of the present disclosure, the in-vehicle terminal device 3000a shown in FIG. 1 may be used as the terminal device described in all embodiments of the present disclosure. The terminal device may be integrated with an application client with a data processing function. In this case, the terminal device may perform data exchange with the access server 2000 through the application client.

The terminal device may be a terminal device that needs to upload a data packet. The terminal device may upload the data packet to the access server 2000, so that the access server 2000 distributes different data packets to different data servers. For ease of understanding, the data server (also referred to as a target data server) described in all embodiments of the present disclosure may be one data server selected from the plurality of data servers described in FIG. 1. For example, the data server described in all embodiments of the present disclosure may be the data server 4000a described in FIG. 1. The data server may receive the data packet uploaded by the terminal device through the access server 2000.

The quantity of application clients in the terminal device may be one or more, and one or more terminal devices may be connected to one access server 2000. Through the access server, the terminal device may forward data packets to different data servers without adapting the terminal device according to a requirement of the data server. A new data server is accessed on the premise of avoiding updating the terminal device, to meet requirements of different terminal devices and different application clients for the data server.

The access server 2000 may distribute a plurality of data packets corresponding to one application client to different data servers. For example, the access server 2000 may forward a data packet B11 to a data server F11, and forward a data packet B12 to a data server F12. The data packet B11 and the data packet B12 may be data packets corresponding to the same application client. In some embodiments, the access server 2000 may also distribute data packets corresponding to a plurality of application clients respectively to different data servers. For example, the access server 2000 may forward a data packet B21 to a data server F21, and the access server 2000 may forward a data packet B22 to a data server F22. The data packet B21 and the data packet B22 may be data packets corresponding to different application clients. In some embodiments, the access server 2000 may further respectively distribute data packets corresponding to a plurality of terminal devices to different data servers. For example, the access server 2000 may forward a data packet B31 to a data server F31, and forward a data packet B32 to a data server F32. The data packet B31 and the data packet B32 may be data packets corresponding to different terminal devices.

All embodiments of the present disclosure provide a data reporting solution for an application client in a terminal device. The data reporting solution may provide a cache mechanism. Data packets may be stored in a database and a cache queue that are involved in the cache mechanism. By polling the data packets in the database, a to-be-added data packet set may be obtained. By polling the data packets in the cache queue, a to-be-uploaded data packet set may be obtained. Therefore, through a joint action of the database and the cache queue, the data packets in the to-be-uploaded data packet set may be uploaded, to be specific, the data packets are uploaded to the access server 2000, so that the access server 2000 distributes the data packets to the data server. Accordingly, regardless of whether the data packets in the to-be-uploaded data packet set are successfully uploaded or the data packets in the to-be-uploaded data packet set fail to be uploaded, all embodiments of the present disclosure have a complete processing flow.

For ease of understanding, in all embodiments of the present disclosure, data uploaded by the application client may be collectively referred to as service data, and in all embodiments of the present disclosure, data obtained after packing processing is performed on the service data may be collectively referred to as data packets.

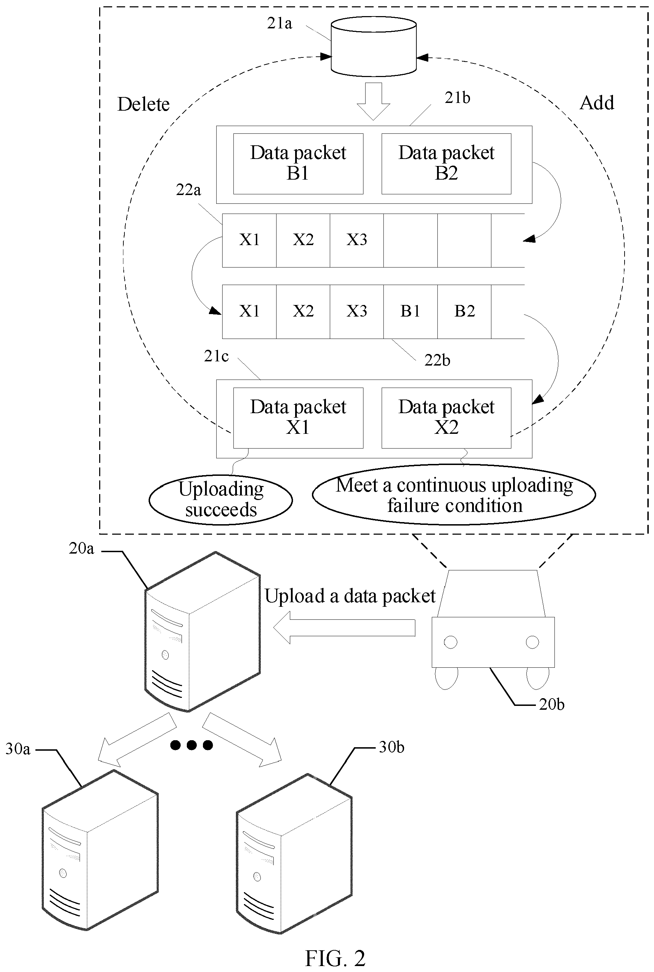

FIG. 2 is a schematic diagram of a scenario for data exchange according to an embodiment of this application. As shown in FIG. 2, server 20a may be an access server 2000 in the embodiment corresponding to FIG. 1. A terminal device 20b may be any terminal device in a terminal device cluster in the embodiment corresponding to FIG. 1. A server 30a and a server 30b may respectively be any data server in a data server cluster in the embodiment corresponding to FIG. 1. For ease of understanding, in all embodiments of the present disclosure, an example in which the terminal device 3000a shown in FIG. 1 is used as the terminal device 20b, the data server 4000a shown in FIG. 1 is used as the server 30a, and the data server 4000b shown in FIG. 1 is used as the server 30b is used. A specific process of performing data exchange among the server 20a, the terminal device 20b, the server 30a, and the server 30b shown in FIG. 2 is described.

As shown in FIG. 2, the terminal device 20b may include a database 21a and a cache queue 22a. The same or different data packets may be stored in database 21a and the cache queue 22a. The quantity of data packets in the database 21a and the quantity of data packets in the cache queue 22a are not limited in embodiments of the present disclosure. The capacity of the database 21a and the capacity of the cache queue 22a are not limited in an implementation of the present disclosure. For ease of understanding, by using the database 21a including a data packet X1, a data packet B1, and a data packet B2 as an example, description is provided by using a cache queue 22a including a data packet X1, a data packet X2, and a data packet X3 as an example. The description is provided by using an example in which there are six capacities of the cache queue 22a.

As shown in FIG. 2, the terminal device 20b may respectively poll the database 21a and the cache queue 22a. Polling periodicities corresponding to the database 21a and the cache queue 22a respectively may be the same or different. Periodicity duration of the polling periodicities corresponding to the database 21a and the cache queue 22a respectively is not limited in embodiments of the present disclosure. Polling may indicate that the terminal device regularly sends an inquiry to the database or the cache queue, inquiries whether the database or the cache queue needs a service of the terminal device, and provides the service as soon as the service is available. Then, the process is continuously repeated. The service may indicate that the terminal device reads a specific quantity of data packets from the database or the cache queue according to a specific regulation, and then uses the read data packets as a result of polling. A result of polling corresponding to the database may be a to-be-added data packet set, and a result of polling corresponding to the cache queue may be a to-be-uploaded data packet set.

When the polling periodicities corresponding to the database 21a and the cache queue 22a respectively are the same, the terminal device 20b may first poll the database 21a, and then poll the cache queue 22a. The terminal device 20b may also first poll the cache queue 22a, and then poll the database 21a. The terminal device 20b may further simultaneously poll the database 21a and the cache queue 22a. When the polling periodicities corresponding to the database 21a and the cache queue 22a respectively are different, the terminal device 20b may poll the database 21a according to the polling periodicity corresponding to the database 21a, and poll the cache queue 22a according to the polling periodicity corresponding to the cache queue 22a. Polling the database 21a and polling the cache queue 22a do not interfere with each other. In all embodiments of the present disclosure, an example in which the terminal device 20b first polls the database 21a and then polls the cache queue 22a is used for description.

As shown in FIG. 2, the terminal device 20b may poll the database 21a to obtain the to-be-added data packet set 21b, and add the to-be-added data packet set 21b to the cache queue 22a. The quantity of data packets in the to-be-added data packet set 21b is not limited in embodiments of the present disclosure. The quantity of data packets in the to-be-added data packet set 21b may be a positive integer that is less than or equal to the quantity of idle positions (e.g., a capacity of the cache queue 22a minus the quantity of packets of data packets in the cache queue 22a) in the cache queue 22a and less than or equal to the quantity of data packets in the database 21a. A description is provided by using an example in which the quantity of data packets in the to-be-added data packet set 21b is two, and the two data packets may specifically include a data packet B1 and a data packet B2.

The terminal device 20b may use the cache queue 22a to which the data packet B1 and the data packet B2 are added as the cache queue 22b. In other words, the cache queue 22b may include a data packet X1, a data packet X2, a data packet X3, a data packet B1, and a data packet B2, then poll the cache queue 22b to obtain a to-be-uploaded data packet set 21c, and upload the to-be-uploaded data packet set 21c. The quantity of data packets in the to-be-uploaded data packet set 21c is not limited in embodiments of the present disclosure. The data packets in the to-be-uploaded data packet set 21c may be a positive integer less than or equal to the quantity of data packets in the cache queue 22b. A description is provided by using an example in which the quantity of data packets in the to-be-uploaded data packet set 21c is two, and the two data packets may specifically include a data packet X1 and a data packet X2.

The terminal device 20b may use the cache queue 22b that is obtained by polling the data packet X1 and the data packet X2 as the cache queue 22c (not shown in the figure). In other words, the cache queue 22c may include a data packet X3, a data packet B1, and a data packet B2.

As shown in FIG. 2, in a process of uploading the data packet X1 and the data packet X2 in the to-be-uploaded data packet set 21c, it is assumed that the data packet X2 (first data packet) meets a continuous uploading failure condition, and the data packet X1 (second data packet) is successfully uploaded, the terminal device 20b may add the data packet X2 to the database 21a in response to determining that the data packet X2 meets the continuous uploading failure condition, to re-read the data packet X2 in the database 21a into the cache queue in a subsequent step, thereby uploading the data packet X2; and the terminal device 20b may upload the data packet X1 to the server 20a in response to determining that the data packet X1 is successfully uploaded, so that the server 20a distributes the data packet X1 to different data servers. For example, the server 20a may distribute the data packet X1 to the server 30a. In addition, the terminal device 20b may determine whether the data packet X1 has been existing in the database 21a, and delete the data packet X1 from the database 21a in response to the data packet X1 having been existing in the database 21a. In this case, the database 21a may include the data packet X2, the data packet B 1, and the data packet B2.

The terminal device 20b may respectively poll the database 21a and the cache queue 22c again. There is a fixed time interval (which may also be referred to as polling periodicity duration) between this polling and the previous polling. Duration of the time interval is not limited in embodiments of the present disclosure. For example, the time interval may be five seconds. The terminal device 20b may poll the database 21a to obtain the new to-be-added data packet set, and add the new to-be-added data packet set to the cache queue 22c. The new to-be-added data packet set may include the data packet X2, and the cache queue 22c (may be referred to as the latest cache queue (not shown in the figure)) to which the data packet X2 is added may include the data packet X3, the data packet B1, the data packet B2, and the data packet X2. The terminal device 20b may poll the latest cache queue to obtain a new to-be-uploaded data packet set. The new to-be-uploaded data packet set may include the data packet X3 and the data packet B 1, and in this case, the new to-be-uploaded data packet set may be removed from the latest cache queue.

Accordingly, when uploading the data packet X3, the terminal device 20b may upload the data packet X3 to the access server 20a in response to the data packet X3 being successfully uploaded, so that the access server 20a distributes the data packet X3 to different data servers. For example, the access server 20a may distribute the data packet X3 to the data server 30b. In addition, the terminal device 20b may determine whether the data packet X3 exists in the database 21a. In response to the data packet X3 not existing in the database 21a, the terminal device 20b does not need to perform other operations.

It may be learnt that all embodiments of the present disclosure may provide a cache mechanism. The cache mechanism may store a to-be-uploaded data packet (namely, the data packet in the to-be-uploaded data packet set) by using the cache queue, and then when uploading processing is performed on the data packet in the to-be-uploaded data packet set, different responses may be made in response to a case that uploading succeeds or uploading fails. For a data packet that is successfully uploaded from the to-be-uploaded data packet set, when the data packet that is successfully uploaded also has been existing in the database, the data packet that has been successfully uploaded will be deleted from the database; and for a data packet that fails to be uploaded, the data packet that fails to be uploaded may be added to the database. Therefore, the different responses made by the terminal device to the data packet that is successfully uploaded and the data packet that fails to be uploaded may improve efficiency of uploading the data packet while ensuring a success rate of uploading the data packet.

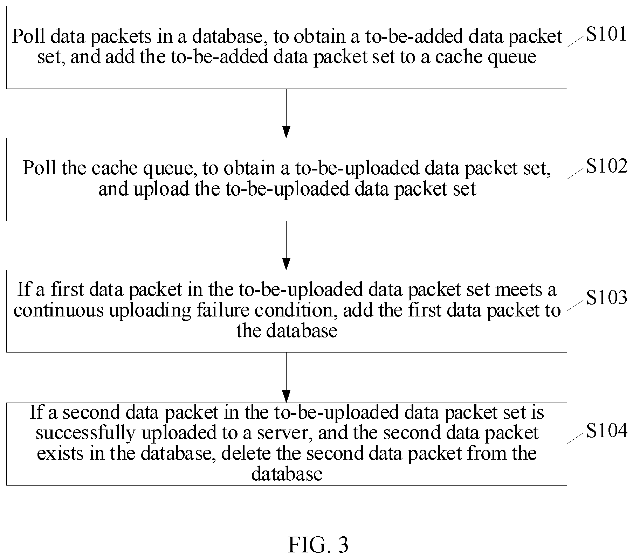

FIG. 3 is a schematic flowchart of a data processing method according to an embodiment of the present disclosure. The method may be performed by the server, or may be performed by the terminal device, or may be jointly performed by the server and the terminal device. The server may be a server 20a in an implementation corresponding to FIG. 2, and the terminal device may be a terminal device 20b in an implementation corresponding to FIG. 2. In all embodiments of the present disclosure, the method performed by the terminal device is used as an example for description. In all embodiments, the terminal device may be an in-vehicle central control device. A database and a cache queue are set in the in-vehicle central control device. The database may be set in a disk (such as a hard disk) of the in-vehicle central control device, and the cache queue may be set in a memory of the in-vehicle central control device. The data processing method may include step S101 to step S104.

Step S101: Poll data packets in a database, to obtain a to-be-added data packet set, and add the to-be-added data packet set to a cache queue.

The terminal device may invoke, in response to an idle position existing in the cache queue, a database thread through a reporting component to poll the data packets in the database, to obtain the to-be-added data packet set. The terminal device may send the to-be-added data packet set to the reporting component through the database thread, and add the to-be-added data packet set to the cache queue through the reporting component.

The reporting component (e.g., reporting SDK) may further include a reporting thread. The terminal device may send the to-be-added data packet set to the reporting thread through the database thread, and add the to-be-added data packet set to the cache queue through the reporting thread. It is to be understood that both the reporting thread and the database thread are components of the reporting component. The reporting thread may be configured to store data packets to the cache queue, read the data packets from the cache queue, and the like. The database thread may be configured to store the data packets to the database, read the data packets from the database, and the like. The uploading processing of the data packets is implemented through an inter-thread communication mechanism, which may improve efficiency of uploading the data packets without affecting operating performance of the system.

The terminal device may invoke, in response to the idle position existing in the cache queue, the database thread through the reporting component, and in the database thread, sort the data packets in the database according to warehousing timestamps (e.g., first warehousing timestamps) of the data packets in the database, to obtain the sorted data packets. The terminal device may poll the sorted data packets, to obtain K data packets, and determine the K data packets as the to-be-added data packet set. K may be a positive integer.

The first warehousing timestamp may represent a timestamp (for example, a moment T1) when a data packet in the database was written into the database, or may also represent a modified timestamp (for example, a moment T2) of an original timestamp (such as the moment T1) of the data packet in the database. The moment T1 may be a previous moment of the moment T2 and before the moment T2. For the modified timestamp of the original timestamp, it refers to a moment at which the data packet met a continuous uploading failure condition (for the continuous uploading failure condition, refer to the description of step S202 and step S203 below). In other words, the timestamp at which the data packet was originally written into the database was updated based on the moment at which the continuous uploading failure condition was met.

K may be a positive integer less than or equal to the quantity of idle positions in the cache queue. K may be a positive integer less than or equal to the quantity of data packets in the database. Generally, K is a fixed value (for example, K is equal to 10). When the quantity of idle positions in the cache queue is greater than K and the quantity of data packets in the database is greater than K, the terminal device may poll the database to obtain K data packets. When the quantity of idle positions in the cache queue is equal to (K-1) and the quantity of data packets in the database is greater than K, the terminal device may poll the database to obtain (K-1) data packets. When the quantity of idle positions in the cache queue is greater than K and the quantity of data packets in the database is equal to (K-1), the terminal device may poll the database to obtain (K-1) data packets.

In some embodiments, when there are no data packets in the database, to be specific, when the database is empty, the terminal device does not need to perform the step of polling the data packets in the database. Accordingly, the to-be-added data packet set cannot be obtained, and the step of adding the to-be-added data packet set to the cache queue does not need to be performed. In this case, K is equal to 0.

Step S102: Poll the cache queue, to obtain a to-be-uploaded data packet set, and upload the to-be-uploaded data packet set.

In step S102, polling may be performed on the cache queue, to obtain the to-be-uploaded data packet set, and uploading is performed on the to-be-uploaded data packet set through a wireless communication connection of the in-vehicle central control device.

The terminal device may poll the cache queue in response to data packets existing in the cache queue and according to queue positions of the data packets in the cache queue, to obtain S data packets in a reporting component, and determine the S data packets as the to-be-uploaded data packet set. S may be a positive integer. The terminal device may upload the to-be-uploaded data packet set based on the network component (e.g., network SDK).

According to a first-in-first-out principle of the queue (for example, the cache queue), S data packets obtained by the terminal device by polling the cache queue may be the first S data packets in the cache queue. In other words, the S data packets obtained by performing polling are at front queue positions in the cache queue. The front queue positions indicate that the data packets entered the cache queue first. In this case, the data packets that entered the cache queue first may be reported first, which ensures fairness of reporting between the data packets and may also reduce a case of a delay in reporting long-standing data packets.

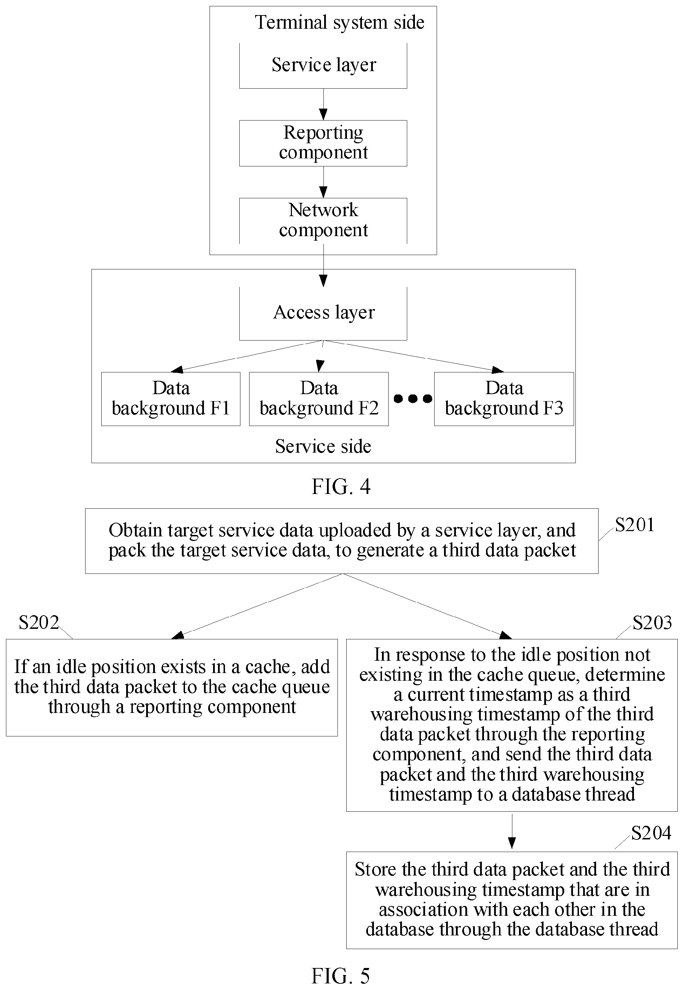

FIG. 4 is a schematic flowchart of data exchange according to an embodiment of the present disclosure. An overall exchange process shown in FIG. 4 may include a terminal system side and a server, the terminal system side may include a service layer, a reporting component, and a network component, and the server may include an access layer and a plurality of data back ends. The reporting component may have different reporting policies, and the network component may have different network knowledge.

The reporting component is a component used in a terminal device to upload data of the service layer to the server.

In some embodiments, the reporting component may be a component of an operating system in the terminal device. The service layer includes an application, such as an application that is installed and run on the operating system.

In some embodiments, the reporting component may be a component of one software platform running on the operating system of the terminal device. The service layer includes an application, such as an application and a mini program (a lightweight application that may be used without being installed) that run in the software platform. The reporting component provides various APIs for the application and the mini program to invoke, thereby triggering the reporting component to perform a corresponding function of each API.

As shown in FIG. 4, the application client may be used as the service layer. After being connected to the reporting component, the service layer may report data packets by using the API, and the reporting component may store the data packets in the database or the cache queue. A network layer may read the data packets from the database or the cache queue, and upload the data packets to an access layer of a service side through the API provided by an internal network module. The access layer may forward the data packets to different data back ends.

The access layer may be an access server, and the data back end may be a data server. In other words, a terminal system may upload the data packets to the access server through a network component, so that the access server may distribute the data packets to different data servers. Accordingly, a data packet may be forwarded to any data server without modifying the application client. The quantity of data servers is not limited in embodiments of the present disclosure. An example in which the data server includes a data back end F1, a data back end F2, and a data back end F3 is used for description.

In some embodiments, when there are no data packets in the cache queue, to be specific, when the cache queue is empty, the terminal device does not need to perform the step of polling the data packets in the cache queue. Accordingly, the to-be-uploaded data packet set cannot be obtained, and the step of uploading the to-be-uploaded data packet does not need to be performed. In this case, S is equal to 0.

S may be a positive integer less than or equal to the quantity of data packets in the cache queue. Generally, S is a fixed value (for example, S is equal to 5). When the quantity of data packets in the cache queue is greater than S, the terminal device may poll the cache queue to obtain S data packets. When the quantity of data packets in the cache queue is less than S, the terminal device may poll the cache queue to obtain all data packets.

Similarly, in some embodiments, when the terminal device polls the cache queue, and the terminal device is uploading M data packets, the terminal device may poll the cache queue to obtain (S-M) data packets according to queue positions of the data packets in the cache queue, and then determine the (S-M) data packets as the to-be-uploaded data packet set. Accordingly, it may be ensured that a maximum quantity of data packets uploaded by the terminal device at the same time point is S, to prevent an uploading process of data packets from occupying too many network resources. M may be a positive integer less than or equal to S.

The terminal device may accumulate, in response to the first data packet of the to-be-uploaded data packet set failing to be uploaded, the quantity of continuous uploading failures occurring during continuous uploading of the first data packet. The terminal device may determine, in response to the quantity of continuous uploading failures reaching a count threshold, that the first data packet meets the continuous uploading failure condition. The terminal device may determine, in response to the quantity of continuous uploading failures failing to reach the count threshold, that the first data packet does not meet the continuous uploading failure condition, and re-add the first data packet to the cache queue through a reporting component. A specific value of a count threshold is not limited in embodiments of the present disclosure. An example in which the count threshold is equal to 3 is used for description in all embodiments of the present disclosure.

For example, the first data packet may be a data packet B. When uploading the data packet B for the first time, the terminal device may set the quantity of continuous uploading failures of the data packet B to 0. In response to the data packet B failing to be uploaded, the terminal device may accumulate the quantity of continuous uploading failures of the data packet B to 1. In this case, the quantity of continuous uploading failures is less than the count threshold. The terminal device may re-add the data packet B to the cache queue and wait for the next polling of the cache queue. The terminal device may poll the cache queue to obtain the data packet B during the next polling, or may poll the cache queue to obtain the data packet B during the polling after the next polling or during the next-next-next polling. A time point at which the data packet B is obtained by performing polling is not limited in embodiments of the present disclosure. When polling the cache queue again to obtain the data packet B, the terminal device may upload the data packet B for the second time. In response to the data packet B failing to be uploaded again, the terminal device may accumulate the quantity of continuous uploading failures of the data packet B to 2, and so on. Until the accumulated quantity of continuous uploading failures of the data packet B is 3, the terminal device may determine that data packet B meets the continuous uploading failure condition.

Step S103: Add, in response to that a first data packet of the to-be-uploaded data packet set meets a continuous uploading failure condition indicating continuous failures occurring during uploading of the first data packet, the first data packet to the database.

In step S103, "adding the first data packet to the database" means storing the first data packet in the database. In some embodiments, if in step S101, when the polling is performed on the data packets in the database, to obtain the to-be-added data packet set, each to-be-added data packet in the to-be-added data packet set is deleted from the database, then in step S103, the first data packet will be written into the database. In some other embodiments, if in step S101, when the polling is performed on the data packets in the database, to obtain the to-be-added data packet set, each to-be-added data packet in the to-be-added data packet set is still kept in the database, then in step S103, the first data packet will not be written into the database again.

Specifically, the terminal device may obtain a data type of the first data packet in response to the first data packet of the to-be-uploaded data packet set meeting the continuous uploading failure condition indicating continuous failures occurring during uploading of the first data packet. In response to the data type being a non-discardable type, the quantity of data packets in the database being less than a quantity threshold, and the first data packet not existing in the database, the terminal device may determine a current timestamp as a warehousing timestamp (a second warehousing timestamp) of the first data packet through a reporting component, send the first data packet and the second warehousing timestamp to a database thread, and associatively store the first data packet and the second warehousing timestamp in the database through the database thread.

The first data packet is obtained by packing a plurality of pieces of service data, and the data type of the first data packet is determined by data types of the plurality of pieces of service data in the first data packet. It may be understood that when the data types of the plurality of pieces of service data in the first data packet are the same, the terminal device may obtain the plurality of pieces of service data with the same data type, and then the plurality of pieces of service data with the same data type are packaged into the first data packet. Accordingly, the data types of the plurality of pieces of service data in the first data packet are all non-discardable types, or the data types of the plurality of pieces of service data in the first data packet are all discardable types. Therefore, when the data types of the plurality of pieces of service data in the first data packet are all non-discardable types, the data type of the first data packet is a non-discardable type; when the data types of the plurality of pieces of service data in the first data packet are all discardable types, the data type of the first data packet is the discardable type.

In some embodiments, the data types of the plurality of pieces of service data in the first data packet may be different. The terminal device may obtain the plurality of pieces of service data with different data types, and then the plurality of pieces of service data with different data types are packaged into the first data packet. Accordingly, the data types of the plurality of pieces of service data in the first data packet are all non-discardable types, or the data types of the plurality of pieces of service data in the first data packet are all discardable types, or a data type of one part of the service data in the first data packet is a non-discardable type, and a data type of another part of the service data is a discardable type. Therefore, when the data types of the plurality of pieces of service data in the first data packet are all non-discardable types, the data type of the first data packet is a non-discardable type; when the data types of the plurality of pieces of service data in the first data packet are all discardable types, the data type of the first data packet is the discardable type; and when the first data packet simultaneously includes both the service data of the non-discardable type and the service data of the discardable type, the data type of the first data packet may be a discardable type.

The service data of the discardable type may represent unimportant service data uploaded by the terminal device, and the service data of the non-discardable type may represent important service data uploaded by the terminal device. In all embodiments of the present disclosure, data loss may be reduced as much as possible. By setting the non-discardable type, reporting integrity of the important data may be ensured. By setting the discardable type, storage resources of the system may be balanced, thereby improving efficiency of uploading data packets.

The quantity threshold represents the maximum quantity of data packets that the database can accommodate. The quantity of data packets in the database is less than the quantity threshold, indicating that there is idle capacity in the database. If there is idle capacity in the database, the terminal device may add the first data packet to the database through a reporting thread in the reporting component. It is to be understood that a specific value of the quantity threshold is not limited in embodiments of the present disclosure. For ease of understanding, an example in which the quantity threshold is equal to 5000 is used for description in all embodiments of the present disclosure.

In some embodiments, the terminal device may delete the first data packet through the reporting component in response to the data type being the discardable type. The terminal device may delete the first data packet through the reporting thread in the reporting component. In this case, neither the database nor the cache queue includes the first data packet.

In some embodiments, in response to the data type being the non-discardable type, the quantity of data packets in the database being less than the quantity threshold, and the first data packet existing in the database, the terminal device may obtain an updated warehousing timestamp of the first data packet through the reporting component, send the first data packet and the updated warehousing timestamp to the database thread, and update the second warehousing timestamp of the first data packet in the database to the updated warehousing timestamp through the database thread. The updated warehousing timestamp may represent a timestamp at which the first data packet is re-written into the database. The terminal device may send the first data packet and the updated warehousing timestamp to the database thread through the reporting thread in the reporting component.

In some embodiments, in response to the data type being the non-discardable type and the quantity of data packets in the database being greater than or equal to the quantity threshold, the terminal device may delete the first data packet through the reporting component. In other words, in response to the quantity of data packets in the database being greater than or equal to the quantity threshold, the terminal device may delete the first data packet through the reporting thread in the reporting component.

Step S104: Delete a second data packet from the database in response to the second data packet of the to-be-uploaded data packet set being successfully uploaded to a server, and the second data packet having been existing in the database.

In some embodiments, the terminal device does not need to perform other steps in response to the second data packet of the to-be-uploaded data packet set being successfully uploaded to the server, and the second data packet not existing in the database. In this case, neither the database nor the cache queue includes the second data packet.

In response to the second data packet of the to-be-uploaded data packet set being successfully uploaded to the access layer (e.g., the access server), the access layer may be configured to unpack the second data packet, and distribute service data that is obtained through unpacking to the server (e.g., a data server). The access server may forward the service data in the second data packet to the same data server, or may forward the service data in the second data packet to different data servers.

The to-be-uploaded data packet set may further include other data packets in addition to the first data packet and the second data packet. For a process in which the terminal device uploads other data packets, refer to the description of the process of uploading the first data packet and the second data packet, which will not be described again herein.

After adding the first data packet to the database or updating the second warehousing timestamp of the first data packet in the database, when the terminal device poll the data packets in the database in subsequent steps, the terminal device may obtain the first data packet from the database by performing polling, and then the first data packet obtained by performing polling may be added to the cache queue. When polling is performed on the data packets in the cache queue in subsequent steps, the first data packet will be obtained from the cache queue by performing polling, thereby implementing re-uploading of the first data packet.

By storing the to-be-uploaded data packets in the cache queue, the to-be-uploaded data packets in the to-be-uploaded data packet set may be directly read from the memory, to avoid reading data packets from a disk, thereby improving efficiency of uploading data packets. In addition, when uploading processing is performed on the data packets in the to-be-uploaded data packet set, uploading of the first data packet may be suspended in response to the first data packet of the to-be-uploaded data packet set meeting the continuous uploading failure condition, and the first data packet is then stored in the database, to avoid network resources from being repeatedly occupied when a network environment is not good. This may improve utilization of the network resources. When the network environment is improved subsequently, by re-polling the database, there is still a chance to successfully upload the first data packet, thereby improving a success rate of uploading the data packet.

FIG. 5 is a schematic flowchart of a data processing method according to an embodiment of the present disclosure. The method may be performed by the server, or may be performed by the terminal device, or may be jointly performed by the server and the terminal device. The server may be a server 20a in an implementation corresponding to FIG. 2, and the terminal device may be a terminal device 20b in an implementation corresponding to FIG. 2. In all embodiments of the present disclosure, the method performed by the terminal device is used as an example for description. The data processing method may include step S201 to step S204.

Step S201: Obtain service data uploaded by a service layer, and pack the service data to generate a third data packet.

The terminal device may obtain the service data uploaded by the service layer in a service thread, and send the service data to a reporting component through the service thread. The terminal device may pack the service data based on the reporting component in response to a data amount of the service data meeting a packing condition, to generate the third data packet.

In order not to affect operating performance of the system, the service reporting data is eventually forwarded to a dedicated reporting thread (e.g., a reporting thread) through an inter-thread communication mechanism. In other words, different service data may be sent by different service threads at a service layer (e.g., an application client) to a reporting thread in the reporting component. Further, in the reporting thread, if a data amount of the service data meets a packing condition, packing processing is performed on the service data. In some embodiments, if the data amount of the service data does not meet the packing condition, the terminal device may wait for a period of time, and then packing processing is performed on the service data after the data amount of the obtained service data meets the packing condition.

If the data amount of the service data reaches a data amount threshold, the terminal device may determine that the data amount of the service data meets the packing condition. In some embodiments, if the data amount of the service data does not reach the data amount threshold, the terminal device may determine that the data amount of the service data does not meet the packing condition.

The reporting component may provide a capability of performing configuration at the back end. In other words, the reporting component may receive an implementation solution configured by a server (hereinafter referred to as a configuration server) corresponding to the reporting component, and perform a function of the reporting component according to the configured implementation solution. The server corresponding to the reporting component may refer to a server configured to manage, configure, and update the reporting component. The server may be a server set by a provider of the reporting component. For example, when the reporting component is a software platform running on an operating system, the server may be a cloud server provided by a provider of the software platform. The server may update the implementation solution configured in the reporting component at any time point or based on instructions sent by a user of the reporting component through other means (for example, through a reporting component management program in a smartphone). For example, an implementation solution configured by a cloud end may be whether to report (to be specific, determining whether to perform the solution of the present disclosure), a size of packing (e.g., the data amount of the service data), a length of the cache queue (namely, a capacity of the cache queue), a capacity of the database, and the like. Accordingly, the implementation solution of the reporting component may be configured without updating the terminal device, the application, and the reporting component in embodiments of the present disclosure, thereby achieving the purpose of controlling a reporting process and avoiding accidents caused by problems that may occur during the reporting.

For example, the reporting component may receive the cache capacity configured by the configuration server, and determine whether an idle position exists in the cache queue by comparing a data amount of data packets in the cache queue with the cache capacity. The reporting component allows writing data into the cache queue in response to the data amount of the data packets in the cache queue being less than the cache capacity, and refuses to write the data into the cache queue in response to the data amount of the data packets in the cache queue being not less than the cache capacity.

In another example, the reporting component may receive a database capacity configured by the configuration server, and determine whether an idle position exists in the database by comparing a data amount of data packets in the database with the database capacity. The reporting component allows writing data into the database in response to the data amount of the data packets in the database being less than the database capacity, and refuses to write data into the database in response to the data amount of the data packets in the database being not less than the database capacity.

In another example, the reporting component may receive an uploading data amount configured by the configuration server. When polling the cache queue, to obtain a to-be-uploaded data packet set, the reporting component may use the uploading data amount as a limiting condition, to obtain the to-be-uploaded data packet set. A data amount of the to-be-uploaded data packet set is not greater than the uploading data amount.

Packing refers to merging and compressing the service data. If the service data uploaded to the access server is not merged and compressed each time, network utilization will be greatly reduced. Especially when a network in an in-vehicle environment is poor, merging and compressing the service data may not only improve network utilization, but also improve a success rate of uploading and timeliness of reporting.

The service data may be a device log associated with an application client in the terminal device. When the terminal device is an in-vehicle terminal, the device log may include a log record in the in-vehicle terminal. The log record may include an abnormal problem recorded when an in-vehicle client encounters functional abnormalities. In some embodiments, the log record may also include vehicle speed information and mileage information of the in-vehicle terminal during driving. In some embodiments, the log record may further include a driving trajectory of the in-vehicle terminal during driving. In some embodiments, the log record may further include vehicle travelling video data collected by a vehicle travelling data recorder on the in-vehicle terminal. Data recorded in the log record is not listed one by one.

Correspondingly, the data server may be a server configured to perform data processing on the log record. For example, the data server may summarize problems related to functional abnormalities encountered by the in-vehicle client during use and provide solutions to the abnormal problems for the in-vehicle client. If the problems related to functional abnormalities cannot be uploaded to the data server in a timely and accurate manner, it would be difficult to obtain enough information to deal with the problem. If the problem is not handled in a timely manner, it will lead to user loss. In another example, the data server may analyze the vehicle speed information and the mileage information of the in-vehicle terminal, to determine whether a speeding behavior occurs in the in-vehicle terminal. When the speeding behavior occurs in the in-vehicle terminal, the data server prompts an overspeed warning for the in-vehicle terminal, to improve driving safety of the in-vehicle terminal. In another example, the data server may perform analysis on the driving trajectory of the in-vehicle terminal, and with reference to current traffic information on the road, implement an accurate and timely in-vehicle infotainment service or provide an autonomous driving service. The in-vehicle infotainment service may provide a function to avoid a congested road section. In another example, the data server may monitor operating status information of the vehicle in real time through vehicle travelling video data collected by the vehicle travelling data recorder, so that the vehicle travelling video data does not need to be copied from the in-vehicle terminal, thereby achieving the purpose of remote control and emergency command.

In the present disclosure, data related to a problem related to functional abnormalities, vehicle speed information, mileage information, a driving trajectory, and driving video data is involved in a device log. When the embodiments of the present disclosure are applied to specific products or technologies, user permission or consent needs to be obtained, and the collection, use, and processing of related data need to comply with related laws, regulations, and standards of related countries. For example, the vehicle terminal may display prompt information "Whether to record vehicle speed information and mileage information, and send the recorded information to a server". Only after corresponding user authorization of the in-vehicle terminal is received, the in-vehicle terminal may use the vehicle speed information and the mileage information as service data, and then upload the service data.

The terminal device may map a log file corresponding to the service layer to a virtual address space of a memory of the service layer. The terminal device may allocate service identifiers (also referred to as target service identifiers) to the service data in an incremental manner, and write the target service identifiers into the log file. The terminal device may obtain a maximum service identifier and a minimum service identifier in a specific time period (also referred to as a target time period) through the virtual address space. The terminal device may obtain the quantity of deduplicated service identifiers counted by the server in the target time period. The terminal device may generate a reporting success rate according to the maximum service identifier, the minimum service identifier, and the quantity of deduplicated service identifiers. Monotonically increasing target service identifiers may ensure accuracy of the generated reporting success rate.

The server may count the quantity of deduplicated service identifiers received in the target time period, and then return the quantity of deduplicated service identifiers to the terminal device, so that the terminal device obtains the maximum service identifier and the minimum service identifier in the target time period from the virtual address space. Then, the terminal device may generate a reporting success rate based on the maximum service identifier, the minimum service identifier, and the quantity of deduplicated service identifiers. In some embodiments, the terminal device may further send the maximum service identifier and the minimum service identifier obtained from the virtual address space in the target time period to the server, so that the server may count the quantity of deduplicated service identifiers received in the target time period. Then, the server may generate the reporting success rate based on the maximum service identifier, the minimum service identifier, and the quantity of deduplicated service identifiers.

The reporting success rate may be generated for one data server or for a plurality of data servers. In other words, the quantity of deduplicated service identifiers may be counted for one data server or may be counted for the plurality of data servers. Accordingly, when the quantity of deduplicated service identifiers is counted for one data server, the reporting success rate is for one data server. When the deduplication service identifier data is counted for all data servers, the reporting success rate is for all data servers. The reporting success rate for all the data servers may be equal to the reporting success rate for the access server. In other words, the deduplication service identifier data may be counted for the access server.

Due to various factors such as network instability, the data server inevitably receives duplicate target service identifiers. Accordingly, the data server needs to perform deduplication on the received target service identifiers, to obtain the deduplicated target service identifiers, and then use the quantity of deduplicated target service identifiers as the quantity of deduplicated service identifiers.

In all embodiments of the present disclosure, the target service identifiers may be saved to a file (e.g., a log file) mapped by memory mapping (mmap, a method for a memory mapping file). The memory has a feature of being written back into a file system when a process crashes. This not only ensures that the number of target service identifiers may continue to grow after the process is restarted, but also prevents a target service identifier from not being written into the file in time when an application crashes, causing target service identifiers not to be monotonically continuous. In other words, the terminal device may map a log file of an application client in a disk into the virtual address space of the application client in the memory. The log file may be used for storing target service identifiers that are uniquely represented. When the process of the application client crashes, the terminal device releases the memory. The target service identifiers in the file in the memory is written back to the disk, to ensure uniqueness of the target service identifiers. Similarly, when the process does not crash, the target service identifiers will also be written back to the disk.

Different log files may be mapped for different application clients through the mmap method, so that each application client will start to incrementally represent target service identifiers of the application client in the log file of the application client starting from 0.

For a specific process in which the terminal device generates a reporting success rate according to the maximum service identifier, the minimum service identifier, and the quantity of deduplicated service identifiers, refer to the following formula (1):

$$\frac{count\left(distinct\ \ log\,id\right)}{\left(max\left(log\,id\right)-min\left(log\,id\right)\right)+1} \tag{1}$$

*log id* may represent a target service identifier, *distinct log id* may represent deduplication performed on *log ids* received by the access server in the target time period, *count* (*distinct logid*) may represent the total quantity of *log ids* after deduplication (i.e., the quantity of deduplicated service identifiers); and *max*(*log id*) may represent a maximum target service identifier allocated in the target time period, *min*(*log id*) may represent a minimum target service identifier allocated in the target time period, and ((*max* (*log id*)-*min*(*log id*))+1) may represent the quantity of target service identifiers (e.g., an accumulated quantity of service identifiers) generated in the target time period.

The terminal device may generate the accumulated quantity of service identifiers based on the maximum service identifier and the minimum service identifier, and then generate the reporting success rate based on a ratio of the quantity of deduplicated service identifiers and the quantity of accumulated service identifiers.

The terminal device may determine whether an idle position exists in the device cache queue, and then perform step S202 when an idle position exists in the cache queue, or perform step S203 and step S204 when the idle position does not exist in the cache queue.

Step S202: Add the third data packet to the cache queue through a reporting component in response to an idle position existing in the cache queue.

In some embodiments, the terminal device may add the third data packet to the cache queue through a reporting thread.

The service data reported by the service layer is not immediately uploaded to an access layer, but is first stored in the cache queue. In a terminal environment (especially an in-vehicle environment), system resources are limited due to various reasons, and a network may enter an unstable state at any time, resulting in a low probability that data is successfully uploaded. Therefore, adding the packaged service data (namely, the third data packet) to the cache queue may save the data and retry after failure to improve a success rate of reporting data packets, and may reduce frequency of disk access, thereby improving efficiency of uploading data packets.

It is to be understood that generally, the terminal device may add the data packets and the third data packet in the to-be-added data packet set to the end of the cache queue, so that the third data packet can be read from the cache queue during subsequent polling. The terminal device may read the third data packet when polling the cache queue subsequently for the first time, may also read the third data packet when polling the cache queue subsequently for the second time, or may read the third data packet by performing other polling subsequently. This is not limited to the present disclosure.

In some embodiments, the terminal device may further add the third data packet to other positions, for example, a header position, in the cache queue according to a packet priority of the third data packet. Accordingly, the terminal device may read the third data packet in the cache queue when polling the cache queue subsequently for the first time. It is to be understood that by setting the packet priority for the third data packet, polling may be first performed on data packets with a higher packet priority in the cache queue, and then data packets with the higher packet priority may be first uploaded. The packet priority may represent the importance of the data packet, thereby achieving the purpose of first uploading the data packets with higher importance.

Step S203: In response to no idle position existing in the cache queue, determine a current timestamp as a third warehousing timestamp of the third data packet through the reporting component, and send the third data packet and the third warehousing timestamp to a database thread.

Step S204: Associatively store the third data packet and the third warehousing timestamp in the database through the database thread.

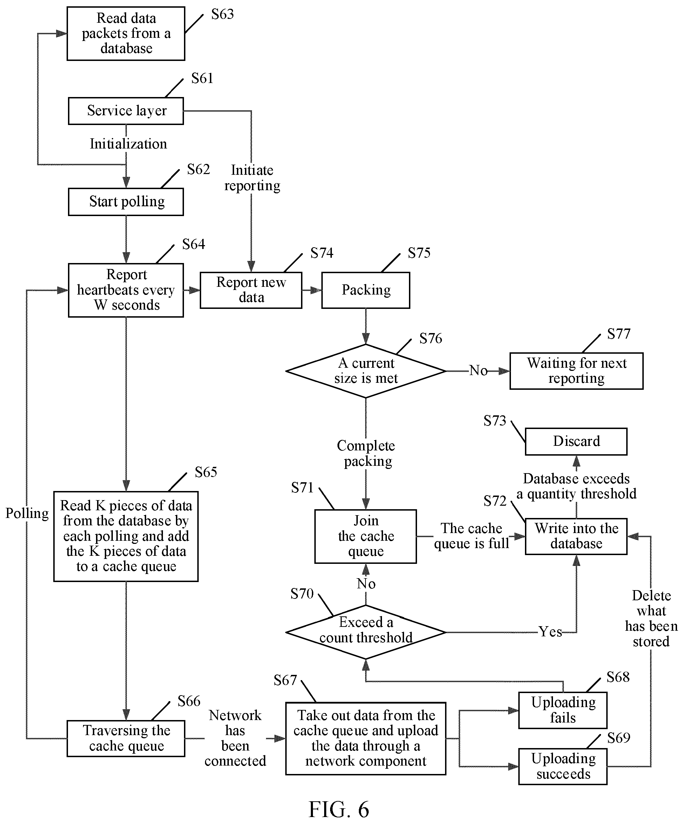

FIG. 6 is a schematic flowchart of performing data reporting according to an embodiment of the present disclosure. As shown in FIG. 6, a service layer (e.g., an application) may perform step S61, to perform initialization through step S61, and then start polling through step S62. Polling may include two parts. One part is to poll a database and a cache queue, and the other part is to perform polling and send heartbeat service data every W seconds. The heartbeat service data refers to service data reported regularly, which may prove that a service end still operates normally and is used by a data back end to analyze an operation status of the service end. A data type of the heartbeat service data may be a discardable type.

The time interval of polling in the first part may be Y seconds. Y may be a positive number, for example, five seconds. W may represent a time interval of polling in the second part. W may be a positive number, for example, 30 seconds.

As shown in FIG. 6, the terminal device may perform step S64, to send the heartbeat service data by performing polling every W seconds through step S64. As shown in FIG. 6, when polling the database and the cache queue, the terminal device may first perform step S63. In step S63, the service data stored in the database is read, and then step S65 is performed. Through step S65, polling is performed on the service data stored in the database. Each polling may read K pieces of service data from the database, use the K pieces of service data as a to-be-added data packet set, and add the to-be-added data packet set to the cache queue. K may be a positive integer.

The terminal device may perform step S66, to poll the cache queue through step S66, and obtain S data packets from the cache queue. The S data packets are used as a to-be-uploaded data packet set, and then under a condition of a network connection, uploading processing is performed on to-be-uploaded data packets in the to-be-uploaded data packet set through step S67. In other words, uploading processing is performed on the data packets taken out from the cache queue through the network component, and the data packets taken out from the cache queue are uploaded to the access server. S may be a positive integer. S may be the quantity of data packets on which uploading processing is performed at the same time point set by the reporting component. By setting the quantity of data packets on which uploading processing is performed at the same time point, the network component may be prevented from occupying too many network resources.

As shown in FIG. 6, in step S68, in response to a data packet in the to-be-uploaded data packet set failing to be uploaded, the terminal device may accumulate the quantity of continuous uploading failures for the data packet that fails to be uploaded. Then, it is determined whether the quantity of continuous uploading failures exceeds a count threshold through step S70. When the quantity of continuous uploading failures exceeds the count threshold, the terminal device may perform step S71, to write the data packet that fails to be uploaded into the database, read the data packet in subsequent polling, and try to upload it again. In some embodiments, when the quantity of continuous uploading failures does not exceed the count threshold, the terminal device may perform step S71. The data packet that fails to be uploaded is re-added to the cache queue and tried to be uploaded again in subsequent polling.

Data types of data packets may be divided into two types: a discardable type and a non-discardable type. When performing step S71 and writing the data packets that fail to be uploaded into the database through step S71, the terminal device needs to determine the data type of the data packets. Further, when the data type of the data packets is a non-discardable type, the data packets that fail to be uploaded is written into the database through step S71. In some embodiments, when the data type of the data packets is the discardable type, the terminal device does not need to write the data packets that fail to be uploaded into the database through step S71, but directly discards the data packets that fail to be uploaded.

When performing step S72, the terminal device may determine whether the quantity of data packets in the database exceeds the quantity threshold, and then writes the data packets that fail to be uploaded into the database when the quantity of packets does not exceed the quantity threshold. In some embodiments, when the quantity of packets exceeds the quantity threshold, the terminal device may perform step S73, to discard the data packets that fail to be uploaded.

When writing the data packets that fail to be uploaded into the database, the terminal device additionally updates one timestamp (to be specific, updates a warehousing timestamp), so that every time polling is performed on the database, a data packet with the longest timestamp is read from the database, added to the cache queue, and retried. In other words, the terminal device may poll the database through least recently used (LRU). In some embodiments, the terminal device may further poll the database through algorithms such as first input first output (FIFO), which is not limited in the present disclosure.

As shown in FIG. 6, in step S69, in response to the data packet in the to-be-uploaded data packet set being successfully uploaded, the terminal device may determine whether the successfully uploaded data packet exists in the database. Then, when the successfully uploaded data packet exists in the database, the successfully uploaded data packet is deleted from the database. In some embodiments, when the successfully uploaded data packet does not exist in the database, the terminal device does not need to perform other operations.

As shown in FIG. 6, when the service layer needs to report new data, the service layer may perform step S74, to upload the new service data through step S74, and then pack the service data through step S75. It is to be understood that the terminal device may determine whether the data amount (namely, a data size) of the service data meets a packing condition through step S76. Then, when the data size of the service data meets the packing condition, step S71 is performed. The data packet obtained by performing packing is added to the cache queue through step S71. In some embodiments, when the data size of the service data does not meet the packing condition, the terminal device may perform step S77, to wait for the service layer to upload new service data in step S77, until the data size of the received to-be-packaged service data meets the packing condition, and the packing is completed.

When adding the data packet obtained by performing packing into the cache queue through step S71, the terminal device needs to determine whether an idle position exists in the cache queue, and then when the idle position exists in the cache queue, the data packet obtained by performing packing is added to the cache queue. In some embodiments, when the idle position does not exist in the cache queue, the terminal device may perform step S72, to write the data packet obtained by performing packing into the database through step S72.

Similarly, when performing step S72, the terminal device may determine whether the quantity of data packets in the database exceeds the quantity threshold, and then writes the data packet obtained by performing packing into the database when the quantity of packets does not exceed the quantity threshold. In some embodiments, when the quantity of packets exceeds the quantity threshold, the terminal device may perform step S73, to discard the data packet obtained by performing packing.

When a cache queue in a dedicated reporting thread (e.g., a reporting thread) is full, the reporting thread needs to directly forward the data packet to the dedicated database thread (e.g., a database thread). When the reporting thread fails to report (to be specific, the quantity of continuous uploading failures exceeds the count threshold), the reporting thread needs to indirectly forward the data packet to the database thread, so that the database thread performs step S72, to write the data packet into the database. Similarly, when reading data from the database during polling, the database thread needs to read the data packet from the database, and then forward the data packet to the reporting thread, so that the reporting thread performs step S71 and adds the data packet to the cache queue.

The terminal device may perform the step S201 to step S204 at any moment. When step S202 is performed, the cache queue of the embodiment corresponding to FIG. 3 may include a third data packet. When polling the cache queue, there is an opportunity to use the third data packet as a to-be-uploaded data packet set. When step S203 and step S204 are performed, the database of the embodiment corresponding to FIG. 3 may include the third data packet. When polling the database, there is an opportunity to use the third data packet as a to-be-added data packet set.

It may be learnt that in all embodiments of the present disclosure, after obtaining to-be-uploaded service data, packing processing may be performed on the service data, and then the third data packet obtained by performing packing is added to the cache queue or the database. In a subsequent process of polling the cache queue or the database, the third data packet is obtained by performing polling, to implement uploading processing of the service data on the third data packet. It is to be understood that by packing the service data, network utilization may be improved, and a success rate of uploading data packets and timeliness of reporting data packets may be improved.

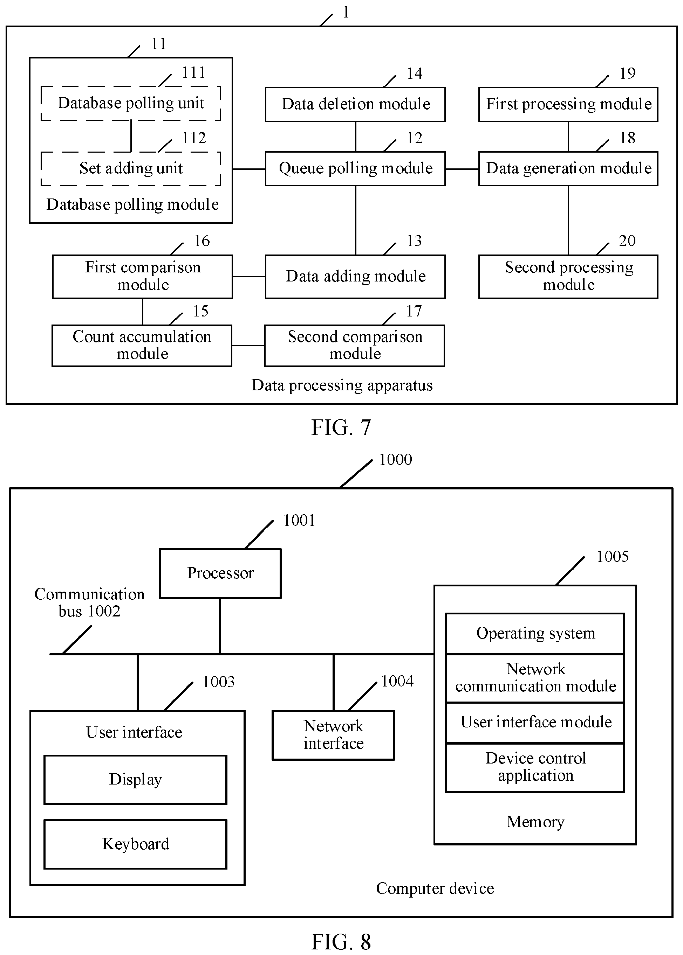

FIG. 7 is a schematic diagram of a structure of a data processing apparatus according to an embodiment of the present disclosure. The data processing apparatus 1 may include: a database polling module 11, a queue polling module 12, a data adding module 13, and a data deleting module 14. The data processing apparatus 1 may further include: a count accumulation module 15, a first comparison module 16, a second comparison module 17, a data generation module 18, a first processing module 19, and a second processing module 20.

The database polling module 11 is configured to poll data packets in the database, to obtain a to-be-added data packet set, and add the to-be-added data packet set to the cache queue; and

the database polling module 11 includes: a database polling unit 111 and a set adding unit 112.

The database polling unit 111 is configured to invoke, in response to an idle position existing in the cache queue, a database thread through a reporting component to poll the data packets in the database, to obtain the to-be-added data packet set.

In some embodiments, the database polling unit 111 is configured to in response to the idle position existing in the cache queue, invoke the database thread through the reporting component, and in the database thread, sort the data packets in the database according to first warehousing timestamps of the data packets in the database, to obtain sorted data packets.

In some embodiments, the database polling unit 111 is configured to poll the sorted data packets, to obtain K data packets, and determine the K data packets as the to-be-added data packet set, where K is a positive integer.

The set adding unit 112 is configured to send the to-be-added data packet set to the reporting component through the database thread, and add the to-be-added data packet set to the cache queue through the reporting component.

For a specific implementation of the database polling unit 111 and the set adding unit 112, refer to the description about step S101 in the embodiment corresponding to FIG. 3, and details are not described herein again.

The queue polling module 12 is configured to poll the cache queue, to obtain a to-be-uploaded data packet set, and upload the to-be-uploaded data packet set.

In some embodiments, the queue polling module 12 is configured to poll the cache queue, in response to data packets existing in the cache queue and according to queue positions of the data packets in the cache queue, to obtain S data packets in a reporting component, and determine the S data packets as the to-be-uploaded data packet set. S is a positive integer.

In some embodiments, the queue polling module 12 is configured to upload the to-be-uploaded data packet set based on a network component.

The data adding module 13 is configured to add, in response to that a first data packet of the to-be-uploaded data packet set meets a continuous uploading failure condition indicating continuous failures occurring during uploading of the first data packet, the first data packet to the database.

In some embodiments, the data adding module 13 is configured to, in response to the first data packet of the to-be-uploaded data packet set meeting the continuous uploading failure condition, obtain a data type of the first data packet.

In some embodiments, the data adding module 13 is configured to, in response to the data type being a non-discardable type, the quantity of data packets in the database being less than a quantity threshold, and the first data packet not existing in the database, determine a current timestamp as a second warehousing timestamp of the first data packet through a reporting component, send the first data packet and the second warehousing timestamp to a database thread, and associatively store the first data packet and the second warehousing timestamp in the database through the database thread.

In some embodiments, the data adding module 13 is further specifically configured to delete the first data packet through the reporting component in response to the data type being a discardable type.

In some embodiments, the data adding module 13 is further configured to, in response to the data type being the non-discardable type, the quantity of data packets in the database being less than the quantity threshold, and the first data packet existing in the database, obtain an updated warehousing timestamp of the first data packet through the reporting component, send the first data packet and the updated warehousing timestamp to the database thread, and update the second warehousing timestamp of the first data packet in the database to the updated warehousing timestamp through the database thread.

In some embodiments, the data adding module 13 is further configured to delete, in response to the data type being the non-discardable type and the quantity of data packets in the database being greater than or equal to the quantity threshold, the first data packet through the reporting component.

The data deleting module 14 is configured to delete, in response to a second data packet of the to-be-uploaded data packet set being successfully uploaded to a server, and the second data packet having been existing in the database, the second data packet from the database.

In some embodiments, the count accumulation module 15 is configured to accumulate, in response to the first data packet of the to-be-uploaded data packet set failing to be uploaded, the quantity of continuous uploading failures occurring during the continuous uploading of the first data packet;

the first comparison module 16 is configured to determine, in response to the quantity of continuous uploading failures reaching a count threshold, that the first data packet meets the continuous uploading failure condition; and
the second comparison module 17 is configured to determine, in response to the quantity of continuous uploading failures failing to reach the count threshold, that the first data packet does not meet the continuous uploading failure condition, and re-add the first data packet to the cache queue through a reporting component.

In some embodiments, the data generation module 18 is configured to obtain service data uploaded by a service layer, and pack the service data, to generate a third data packet.

In some embodiments, the data generation module 18 is configured to obtain the service data uploaded by the service layer in a service thread, and send the service data to the reporting component through the service thread.

In some embodiments, the data generation module 18 is configured to pack, in response to a data amount of the service data meeting a packing condition, the service data based on the reporting component, to generate the third data packet.

The first processing module 19 is configured to add the third data packet to the cache queue through a reporting component in response to an idle position existing in the cache queue.

In some embodiments, the second processing module 20 is configured to, in response to no idle position existing in the cache queue, determine a current timestamp as a third warehousing timestamp of the third data packet through the reporting component, and send the third data packet and the third warehousing timestamp to a database thread.

The second processing module 20 is configured to associatively store the third data packet and the third warehousing timestamp in the database through the database thread.

In some embodiments, the data processing apparatus 1 is further configured to map a log file corresponding to the service layer to a virtual address space of a memory of the service layer.

In some embodiments, the data processing apparatus 1 is further configured to allocate a target service identifier to the service data in an incremental manner, and write the target service identifier into the log file.

In some embodiments, the data processing apparatus 1 is further configured to obtain a maximum service identifier and a minimum service identifier in a target time period through the virtual address space.

In some embodiments, the data processing apparatus 1 is further configured to obtain the quantity of deduplicated service identifiers counted by the server in the target time period.

In some embodiments, the data processing apparatus 1 is further configured to generate a reporting success rate according to the maximum service identifier, the minimum service identifier, and the quantity of deduplicated service identifiers.

In some embodiments, the data processing apparatus 1 is further configured to, in response to the second data packet of the to-be-uploaded data packet set being successfully uploaded to an access layer, unpack the second data packet, and distributing service data that is obtained through unpacking to the server.

For detailed implementations of the database polling module 11, the queue polling module 12, the data adding module 13, and the data deleting module 14, the description about step S101 to step S104 in the embodiment corresponding to FIG. 3 can be referenced, and details are not described herein again. For detailed implementations of the count accumulation module 15, the first comparison module 16, the second comparison module 17, the data generation module 18, the first processing module 19, and the second processing module 20, refer to step S201 to step S204 in the embodiment corresponding to FIG. 5, and details are not described herein again. In addition, the description of beneficial effects of the same method is not described herein again.

In some embodiments, the data processing apparatus 1 may further include a configuration receiving module, configured to receive configuration information of a configuration server, where the configuration information includes one of the following:

a cache capacity indicating a maximum of a data amount allowed to be written into the cache queue;
a database capacity indicating a maximum of a data amount allowed to be written into the database; and
an uploading data amount indicating a maximum data amount of data packets that are simultaneously uploaded.
the data processing apparatus 1 may determine whether an idle position exists in the cache queue by comparing a data amount of data packets in the cache queue with the cache capacity; allow writing data into the cache queue in response to the data amount of the data packets in the cache queue being less than the cache capacity; and refuse to write the data into the cache queue in response to the data amount of the data packets in the cache queue being not less than the cache capacity.

The data processing apparatus 1 may determine whether an idle position exists in the database by comparing a data amount of data packets in the database with the database capacity; allow writing data into the database in response to the data amount of the data packets in the database being less than the database capacity; and refuse to write data into the database in response to the data amount of the data packets in the database being not less than the database capacity.

When the queue polling module 12 polls the cache queue to obtain the to-be-uploaded data packet set, the queue polling module 12 may use the uploading data amount as a limiting condition, to obtain the to-be-uploaded data packet set. The data amount of the to-be-uploaded data packet set is not greater than the uploading data amount.

FIG. 8 is a schematic diagram of a structure of a computer device according to an embodiment of the present disclosure. As shown in FIG. 8, the computer device 1000 may include: a processor 1001, a network interface 1004, and a memory 1005. In addition, the computer device 1000 may further include: a user interface 1003 and at least one communication bus 1002. The communication bus 1002 is configured to implement connection and communication between the components. In some embodiments, the user interface 1003 may include a display and a keyboard. Optionally, the user interface 1003 may further include a standard wired interface and a wireless interface. In some embodiments, the network interface 1004 may include a standard wired interface and a standard wireless interface (such as a Wi-Fi interface). The memory 1005 may be a high-speed RAM, or may be a non-volatile memory, for example, at least one magnetic disk memory. In some embodiments, the memory 1005 may alternatively be at least one storage apparatus located away from the processor 1001. As shown in FIG. 8, the memory 1005 used as a computer-readable storage medium may include an operating system, a network communication module, a user interface module, and a device-control application.

In the computer device 1000 shown in FIG. 8, the network interface 1004 may provide a network communication function; the user interface 1003 is mainly configured to provide an input interface for the user; and the processor 1001 may be configured to invoke a device control application stored in the memory 1005, to implement the following operations:

polling data packets in the database, to obtain a to-be-added data packet set, and adding the to-be-added data packet set to the cache queue;
polling the cache queue, to obtain a to-be-uploaded data packet set, and uploading the to-be-uploaded data packet set;
adding a first data packet to the database in response to that the first data packet of the to-be-uploaded data packet set meets a continuous uploading failure condition;
deleting a second data packet from the database in response to the second data packet of the to-be-uploaded data packet set being successfully uploaded to a server, and the second data packet having been existing in the database.

It is to be understood that the computer device 1000 described in embodiments of the present disclosure may implement the descriptions of the data processing method in the embodiments corresponding to FIG. 3 and FIG. 5, or may also implement the descriptions of the data processing apparatus 1 in the embodiment corresponding to FIG. 7. Details are not described herein again. In addition, the description of beneficial effects of the same method is not described herein again.

In addition, all embodiments of the present disclosure further provide a computer-readable storage medium. The computer-readable storage medium stores a computer program executed by the data processing apparatus 1 mentioned above, and the computer program includes program instructions. When executing the program instructions, the processor can perform the descriptions of the data processing method in the embodiments corresponding to FIG. 3 and FIG. 5. Therefore, details are not described herein again. In addition, the description of beneficial effects of the same method is not described herein again. For technical details that are not disclosed in the embodiments of the computer-readable storage medium of the present disclosure, refer to the method embodiments of the present disclosure.

In addition, all embodiments of the present disclosure further provide a computer program product or a computer program. The computer program product or the computer program may include computer instructions, the computer instructions may be stored in a computer-readable storage medium. A processor of a computer device reads the computer instructions from the computer-readable storage medium and may execute the computer instructions to enable the computer device to perform the description of the data processing method in the foregoing embodiments corresponding to FIG. 3 and FIG. 5, and therefore, details are not repeated herein. In addition, the description of beneficial effects of the same method is not described herein again. For technical details that are not disclosed in the computer program product or computer program embodiments involved in the present disclosure, reference may be made to the descriptions of the method embodiments of the present disclosure.

A person skilled in the art may understand that all or some of the procedures of the methods of the foregoing embodiments may be implemented by a computer program instructing relevant hardware. The computer program may be stored in a computer-readable storage medium. When the program is executed, the procedures of the foregoing method embodiments may be implemented. The storage medium may be a magnetic disk, an optical disc, a read-only memory (ROM), a random-access memory (RAM), or the like.

The technical features in the foregoing embodiments may be randomly combined. For concise description, not all possible combinations of the technical features in the embodiment are described. However, provided that combinations of the technical features do not conflict with each other, the combinations of the technical features are considered as falling within the scope recorded in this specification.

What are disclosed above are merely examples of embodiments of the present disclosure, and certainly are not intended to limit the protection scope of the present disclosure established by the appended set of claims.

**Claims**

1.    A data processing method, executable by an in-vehicle central control device, a database and a cache queue being arranged in the in-vehicle central control device, and **characterized by** the method comprising:

reading a first data packet set from data packets in the database, and adding the first data packet set to the cache queue (S101);
reading a second data packet set from the cache queue, and uploading the second data packet set to a server through a wireless communication connection of the in-vehicle central control device (S102);
storing, in response to that a first data packet of the second data packet set meets a first condition indicating continuous failures occurring during uploading of the first data packet, the first data packet to the database (S103); and
deleting, in response to a second data packet of the second data packet set being successfully uploaded to the server, the second data packet from the database (S104);
accumulating, in response to the first data packet of the second data packet set failing to be uploaded, a quantity of continuous failures occurring during the uploading of the first data packet;
determining, in response to the quantity of continuous failures reaching a count threshold, that the first data packet meets the first condition; and
determining, in response to the quantity of continuous failures failing to reach the count threshold, that the first data packet does not meet the first condition, and re-adding the first data packet to the cache queue through a reporting component.

2.    The method according to claim 1, further comprising:

receiving a cache capacity configured by a configuration server;
determining, by comparing a data amount of data packets in the cache queue with the cache capacity, whether an idle position exists in the cache queue;
allowing, in response to the data amount of the data packets in the cache queue being less than the cache capacity, writing data into the cache queue; and
refusing to, in response to the data amount of the data packets in the cache queue being not less than the cache capacity, write the data into the cache queue; or
receiving a database capacity configured by the configuration server;
determining, by comparing a data amount of data packets in the database with the database capacity, whether an idle position exists in the database;
allowing, in response to the data amount of the data packets in the database being less than the database capacity, writing data into the database; and
refusing to, in response to the data amount of the data packets in the database being not less than the database capacity, write the data into the database.

3. The method according to claim 1 or 2, further comprising:

receiving an uploading data amount configured by a configuration server, wherein
the reading a second data packet set from the cache queue, comprises:
using the uploading data amount as a limiting condition, to obtain the second data packet set, wherein a data amount of the second data packet set is not greater than the uploading data amount.

4. The method according to any one of claims 1 to 3, wherein the reading a first data packet set from data packets in the database, and adding the first data packet set to the cache queue comprises:

invoking, in response to an idle position existing in the cache queue, a database thread through a reporting component to read the first data packet set from the data packets in the database; and
sending the first data packet set to the reporting component through the database thread, and adding the first data packet set to the cache queue through the reporting component.

5. The method according to claim 4, wherein the invoking, in response to an idle position existing in the cache queue, a database thread through a reporting component to read the first data packet set from the data packets in the database comprises:

in response to the idle position existing in the cache queue, invoking the database thread through the reporting component, and in the database thread, sorting the data packets in the database according to first warehousing timestamps of the data packets in the database, to obtain sorted data packets; and
reading K data packets from the sorted data packets, and determining the K data packets as the first data packet set, wherein K is a positive integer.

6. The method according to any one of claims 1 to 5, wherein the reading a second data packet set from the cache queue, and uploading the second data packet set comprises:

in response to data packets existing in the cache queue, reading S data packets from the cache queue in a reporting component according to queue positions of the data packets in the cache queue, and determining the S data packets as the second data packet set, wherein S is a positive integer; and
uploading the second data packet set based on a network component.

7. The method according to any one of claims 1 to 6, wherein the storing, in response to that a first data packet of the second data packet set meets a first condition, the first data packet to the database comprises:

obtaining, in response to the first data packet of the second data packet set meeting the first condition, a data type of the first data packet; and
in response to the data type being a non-discardable type, a quantity of data packets in the database being less than a quantity threshold, and the first data packet not existing in the database, determining a current timestamp as a second warehousing timestamp of the first data packet through a reporting component, sending the first data packet and the second warehousing timestamp to a database thread, and associatively storing the first data packet and the second warehousing timestamp in the database through the database thread; and/or
deleting, in response to the data type being a discardable type, the first data packet through the reporting component;
in response to the data type being the non-discardable type, the quantity of data packets in the database being less than the quantity threshold, and the first data packet existing in the database, obtaining an updated warehousing timestamp of the first data packet through the reporting component, sending the first data packet and the updated warehousing timestamp to the database thread, and updating the second warehousing timestamp of the first data packet in the database to the updated warehousing timestamp through the database thread; and
deleting, in response to the data type being the non-discardable type and the quantity of data packets in the database being greater than or equal to the quantity threshold, the first data packet through the reporting component.

8. The method according to any one of claims 1 to 7, further comprising:

   obtaining service data uploaded by a service layer, and packing the service data to generate a third data packet (S201); and
   adding, in response to an idle position existing in the cache queue, the third data packet to the cache queue through a reporting component (S202).

9. The method according to claim 8, wherein the obtaining service data uploaded by a service layer, and packing the service data to generate a third data packet (S201) comprises:

   obtaining the service data uploaded by the service layer in a service thread, and sending the service data to the reporting component through the service thread; and
   packing, in response to a data amount of the service data meeting a packing condition, the service data based on the reporting component to generate the third data packet.

10. The method according to claim 8 or 9, further comprising:

    in response to no idle position existing in the cache queue, determining a current timestamp as a third warehousing timestamp of the third data packet through the reporting component, and sending the third data packet and the third warehousing timestamp to a database thread (S203); and
    associatively storing the third data packet and the third warehousing timestamp in the database through the database thread (S204).

11. The method according to any one of claims 8 to 10, further comprising:

    mapping a log file corresponding to the service layer to a virtual address space of a memory of the service layer;
    allocating a target service identifier to the service data in an incremental manner, and writing the target service identifier into the log file;
    obtaining a maximum service identifier and a minimum service identifier in a target time period through the virtual address space;
    obtaining a quantity of deduplicated service identifiers counted by the server in the target time period; and
    generating a reporting success rate according to the maximum service identifier, the minimum service identifier, and the quantity of deduplicated service identifiers.

12. The method according to any one of claims 1 to 11, further comprising:
    in response to the second data packet in the second data packet set being successfully uploaded to an access layer, unpacking the second data packet by the access layer, and distributing service data that is obtained through unpacking to the server.

13. A computer device (1000), comprising: a processor (1001) and a memory (1005),
    the processor (1001) being connected to the memory (1005), the memory (1005) being configured to store a computer program, and the processor (1001) being configured to invoke the computer program, to enable the computer device (1000) to perform the method according to any one of claims 1 to 12.

14. A computer-readable storage medium, storing a computer program, wherein the computer program is applicable to be loaded and executed by a processor, to enable a computer device comprising the processor to perform the method according to any one of claims 1 to 12.

**Patentansprüche**

1. Datenverarbeitungsverfahren, das von einer fahrzeuginternen Zentralsteuerungsvorrichtung ausführbar ist, wobei eine Datenbank und eine Cache-Warteschlange in der fahrzeuginternen Zentralsteuerungsvorrichtung angeordnet sind, und **dadurch gekennzeichnet, dass** das Verfahren umfasst:

   Lesen eines ersten Datenpaketsatzes aus Datenpaketen in der Datenbank und Hinzufügen des ersten Datenpaketsatzes zu der Cache-Warteschlange (S101);
   Lesen eines zweiten Datenpaketsatzes aus der Cache-Warteschlange und Hochladen des zweiten Datenpaketsatzes zu einem Server durch eine drahtlose Kommunikationsverbindung der fahrzeuginternen Zentralsteuerungsvorrichtung (S102);

Speichern, in Reaktion darauf, dass ein erstes Datenpaket des zweiten Datenpaketsatzes eine erste Bedingung erfüllt, die kontinuierliche Fehler anzeigt, die während des Hochladens des ersten Datenpakets auftreten, des ersten Datenpakets in der Datenbank (S103); und

Löschen, in Reaktion darauf, dass ein zweites Datenpaket des zweiten Datenpaketsatzes erfolgreich zu dem Server hochgeladen wird, des zweiten Datenpakets aus der Datenbank (S104);

Akkumulieren, in Reaktion darauf, dass das erste Datenpaket des zweiten Datenpaketsatzes nicht hochgeladen werden kann, einer Anzahl von kontinuierlichen Fehlern, die während des Hochladens des ersten Datenpakets auftreten;

Bestimmen, in Reaktion darauf, dass die Anzahl von kontinuierlichen Fehlern einen Zählschwellenwert erreicht, dass das erste Datenpaket die erste Bedingung erfüllt; und

Bestimmen, in Reaktion darauf, dass die Anzahl von kontinuierlichen Fehlern den Zählschwellenwert nicht erreicht, dass das erste Datenpaket die erste Bedingung nicht erfüllt, und erneutes Hinzufügen des ersten Datenpakets zu der Cache-Warteschlange durch eine Berichtskomponente.

2. Verfahren nach Anspruch 1, ferner umfassend:

Empfangen einer Cache-Kapazität, die von einem Konfigurationsserver konfiguriert wird;

Bestimmen, durch Vergleichen einer Datenmenge von Datenpaketen in der Cache-Warteschlange mit der Cache-Kapazität, ob eine freie Position in der Cache-Warteschlange existiert;

Erlauben, in Reaktion darauf, dass die Datenmenge der Datenpakete in der Cache-Warteschlange geringer als die Cache-Kapazität ist, des Schreibens von Daten in die Cache-Warteschlange; und

Verweigern, in Reaktion darauf, dass die Datenmenge der Datenpakete in der Cache-Warteschlange nicht geringer als die Cache-Kapazität ist, des Schreibens der Daten in die Cache-Warteschlange; oder

Empfangen einer Datenbankkapazität, die von dem Konfigurationsserver konfiguriert wird;

Bestimmen, durch Vergleichen einer Datenmenge von Datenpaketen in der Datenbank mit der Datenbankkapazität, ob eine freie Position in der Datenbank existiert;

Erlauben, in Reaktion darauf, dass die Datenmenge der Datenpakete in der Datenbank geringer als die Datenbankkapazität ist, des Schreibens von Daten in die Datenbank; und

Verweigern, in Reaktion darauf, dass die Datenmenge der Datenpakete in der Datenbank nicht geringer als die Datenbankkapazität ist, des Schreibens der Daten in die Datenbank.

3. Verfahren nach Anspruch 1 oder 2, ferner umfassend:

Empfangen einer Hochladedatenmenge, die von einem Konfigurationsserver konfiguriert wird, wobei das Lesen eines zweiten Datenpaketsatzes aus der Cache-Warteschlange umfasst:

Verwenden der Hochladedatenmenge als eine Begrenzungsbedingung, um den zweiten Datenpaketsatz zu erhalten, wobei eine Datenmenge des zweiten Datenpaketsatzes nicht größer als die Hochladedatenmenge ist.

4. Verfahren nach einem der Ansprüche 1 bis 3, wobei das Lesen eines ersten Datenpaketsatzes aus Datenpaketen in der Datenbank und Hinzufügen des ersten Datenpaketsatzes zu der Cache-Warteschlange umfasst:

Aufrufen, in Reaktion darauf, dass eine freie Position in der Cache-Warteschlange existiert, eines Datenbank-Threads durch eine Berichtskomponente, um den ersten Datenpaketsatz aus den Datenpaketen in der Datenbank zu lesen; und

Senden des ersten Datenpaketsatzes an die Berichtskomponente durch den Datenbank-Thread und Hinzufügen des ersten Datenpaketsatzes zu der Cache-Warteschlange durch die Berichtskomponente.

5. Verfahren nach Anspruch 4, wobei das Aufrufen, in Reaktion darauf, dass eine freie Position in der Cache-Warteschlange existiert, eines Datenbank-Threads durch eine Berichtskomponente, um den ersten Datenpaketsatz aus den Datenpaketen in der Datenbank zu lesen, umfasst:

in Reaktion darauf, dass die freie Position in der Cache-Warteschlange existiert, Aufrufen des Datenbank-Threads durch die Berichtskomponente und, in dem Datenbank-Thread, Sortieren der Datenpakete in der Datenbank gemäß ersten Einlagerungszeitstempeln der Datenpakete in der Datenbank, um sortierte Datenpakete zu erhalten; und

Lesen von K Datenpaketen aus den sortierten Datenpaketen und Bestimmen der K Datenpakete als den ersten Datenpaketsatz, wobei K eine positive ganze Zahl ist.

6. Verfahren nach einem der Ansprüche 1 bis 5, wobei das Lesen eines zweiten Datenpaketsatzes aus der Cache-Warteschlange und Hochladen des zweiten Datenpaketsatzes umfasst:

in Reaktion darauf, dass Datenpakete in der Cache-Warteschlange existieren, Lesen von S Datenpaketen aus der Cache-Warteschlange in einer Berichtskomponente gemäß Warteschlangenpositionen der Datenpakete in der Cache-Warteschlange und Bestimmen der S Datenpakete als den zweiten Datenpaketsatz, wobei S eine positive ganze Zahl ist; und
Hochladen des zweiten Datenpaketsatzes basierend auf einer Netzwerkkomponente.

7. Verfahren nach einem der Ansprüche 1 bis 6, wobei das Speichern, in Reaktion darauf, dass ein erstes Datenpaket des zweiten Datenpaketsatzes eine erste Bedingung erfüllt, des ersten Datenpakets in der Datenbank umfasst:

Erhalten, in Reaktion darauf, dass das erste Datenpaket des zweiten Datenpaketsatzes die erste Bedingung erfüllt, eines Datentyps des ersten Datenpakets; und
in Reaktion darauf, dass der Datentyp ein nicht verwertbarer Typ ist, eine Anzahl von Datenpaketen in der Datenbank geringer als ein Anzahlschwellenwert ist und das erste Datenpaket nicht in der Datenbank existiert, Bestimmen eines aktuellen Zeitstempels als einen zweiten Einlagerungszeitstempel des ersten Datenpakets durch eine Berichtskomponente, Senden des ersten Datenpakets und des zweiten Einlagerungszeitstempels an einen Datenbank-Thread und assoziatives Speichern des ersten Datenpakets und des zweiten Einlagerungszeitstempels in der Datenbank durch den Datenbank-Thread, und/oder
Löschen, in Reaktion darauf, dass der Datentyp ein verwertbarer Typ ist, des ersten Datenpakets durch die Berichtskomponente,
in Reaktion darauf, dass der Datentyp der nicht verwerfbare Typ ist, die Anzahl von Datenpaketen in der Datenbank geringer als der Anzahlschwellenwert ist und das erste Datenpaket in der Datenbank existiert, Erhalten eines aktualisierten Einlagerungszeitstempels des ersten Datenpakets durch die Berichtskomponente, Senden des ersten Datenpakets und des aktualisierten Einlagerungszeitstempels an den Datenbank-Thread und Aktualisieren des zweiten Einlagerungszeitstempels des ersten Datenpakets in der Datenbank auf den aktualisierten Einlagerungszeitstempel durch den Datenbank-Thread; und
Löschen, in Reaktion darauf, dass der Datentyp der nicht verwerfbare Typ ist und die Anzahl von Datenpaketen in der Datenbank größer als oder gleich dem Anzahlschwellenwert ist, des ersten Datenpakets durch die Berichtskomponente.

8. Verfahren nach einem der Ansprüche 1 bis 7, ferner umfassend:

Erhalten von Dienstdaten, die von einer Dienstschicht hochgeladen werden, und Packen der Dienstdaten, um ein drittes Datenpaket zu erzeugen (S201); und
Hinzufügen, in Reaktion darauf, dass eine freie Position in der Cache-Warteschlange existiert, des dritten Datenpakets zu der Cache-Warteschlange durch eine Berichtskomponente (S202).

9. Verfahren nach Anspruch 8, wobei das Erhalten von Dienstdaten, die von einer Dienstschicht hochgeladen werden, und Packen der Dienstdaten, um ein drittes Datenpaket zu erzeugen (S201), umfasst:

Erhalten der Dienstdaten, die von der Dienstschicht hochgeladen werden, in einem Dienst-Thread und Senden der Dienstdaten an die Berichtskomponente durch den Dienst-Thread; und
Packen, in Reaktion darauf, dass eine Datenmenge der Dienstdaten eine Packbedingung erfüllt, der Dienstdaten basierend auf der Berichtskomponente, um das dritte Datenpaket zu erzeugen.

10. Verfahren nach Anspruch 8 oder 9, ferner umfassend:

in Reaktion darauf, dass keine freie Position in der Cache-Warteschlange existiert, Bestimmen eines aktuellen Zeitstempels als einen dritten Einlagerungszeitstempel des dritten Datenpakets durch die Berichtskomponente und Senden des dritten Datenpakets und des dritten Einlagerungszeitstempels an einen Datenbank-Thread (S203); und
assoziatives Speichern des dritten Datenpakets und des dritten Einlagerungszeitstempels in der Datenbank durch den Datenbank-Thread (S204).

**11.** Verfahren nach einem der Ansprüche 8 bis 10, ferner umfassend:

Abbilden einer Protokolldatei, die der Dienstschicht entspricht, auf einen virtuellen Adressraum eines Speichers der Dienstschicht;
Zuweisen einer Zieldienstkennung zu den Dienstdaten in einer inkrementellen Weise und Schreiben der Zieldienstkennung in die Protokolldatei;
Erhalten einer maximalen Dienstkennung und einer minimalen Dienstkennung in einer Zielzeitperiode durch den virtuellen Adressraum;
Erhalten einer Anzahl von deduplizierten Dienstkennungen, die von dem Server in der Zielzeitperiode gezählt werden; und
Erzeugen einer Berichtserfolgsrate gemäß der maximalen Dienstkennung, der minimalen Dienstkennung und der Anzahl von deduplizierten Dienstkennungen.

**12.** Verfahren nach einem der Ansprüche 1 bis 11, ferner umfassend:
in Reaktion darauf, dass das zweite Datenpaket in dem zweiten Datenpaketsatz erfolgreich zu einer Zugriffsschicht hochgeladen wird, Entpacken des zweiten Datenpakets durch die Zugriffsschicht und Verteilen von Dienstdaten, die durch Entpacken erhalten werden, an den Server.

**13.** Computervorrichtung (1000), umfassend: einen Prozessor (1001) und einen Speicher (1005),
wobei der Prozessor (1001) mit dem Speicher (1005) verbunden ist, wobei der Speicher (1005) konfiguriert ist, ein Computerprogramm zu speichern, und wobei der Prozessor (1001) konfiguriert ist, das Computerprogramm aufzurufen, um die Computervorrichtung (1000) zu befähigen, das Verfahren nach einem der Ansprüche 1 bis 12 durchzuführen.

**14.** Computerlesbares Speichermedium, das ein Computerprogramm speichert, wobei das Computerprogramm anwendbar ist, um von einem Prozessor geladen und ausgeführt zu werden, um eine Computervorrichtung, die den Prozessor umfasst, zu befähigen, das Verfahren nach einem der Ansprüche 1 bis 12 durchzuführen.

**Revendications**

**1.** Procédé de traitement de données, exécutable par un dispositif de commande central embarqué, une base de données et une file d'attente de cache étant disposées dans le dispositif de commande central embarqué, et **caractérisé en ce que** le procédé comprend :

la lecture d'un premier ensemble de paquets de données à partir de paquets de données dans la base de données, et l'ajout du premier ensemble de paquets de données à la file d'attente de cache (S101) ;
la lecture d'un deuxième ensemble de paquets de données à partir de la file d'attente de cache, et le téléversement du deuxième ensemble de paquets de données vers un serveur par l'intermédiaire d'une connexion de communication sans fil du dispositif de commande central embarqué (S102);
le stockage, en réponse au fait qu'un premier paquet de données du deuxième ensemble de paquets de données satisfait une première condition indiquant des échecs consécutifs se produisant pendant le téléversement du premier paquet de données, du premier paquet de données dans la base de données (S103); et
la suppression, en réponse au téléversement réussi d'un deuxième paquet de données du deuxième ensemble de paquets de données vers le serveur, du deuxième paquet de données de la base de données (S104);
l'accumulation, en réponse à l'échec du téléversement du premier paquet de données du deuxième ensemble de paquets de données, d'une quantité d' échecs consécutifs se produisant pendant le téléversement du premier paquet de données ;
la détermination, en réponse à la quantité d' échecs consécutifs atteignant un seuil de comptage, que le premier paquet de données satisfait la première condition ; et
la détermination, en réponse à la quantité d'échecs consécutifs n'atteignant pas le seuil de comptage, que le premier paquet de données ne satisfait pas la première condition, et le réajout du premier paquet de données à la file d'attente de cache par l'intermédiaire d'un composant de signalement.

**2.** Procédé selon la revendication 1, comprenant en outre :

la réception d'une capacité de cache configurée par un serveur de configuration ;
la détermination, en comparant une quantité de données de paquets de données dans la file d'attente de cache avec la capacité de cache, du fait qu'une position libre existe dans la file d'attente de cache ;
l'autorisation, en réponse à la quantité de données des paquets de données dans la file d'attente de cache étant inférieure à la capacité de cache, d'écrire des données dans la file d'attente de cache ; et
le refus, en réponse à la quantité de données des paquets de données dans la file d'attente de cache n'étant pas inférieure à la capacité de cache, d'écrire les données dans la file d'attente de cache ; ou
la réception d'une capacité de base de données configurée par le serveur de configuration ;
la détermination, en comparant une quantité de données de paquets de données dans la base de données avec la capacité de base de données, du fait qu'une position libre existe dans la base de données ;
l'autorisation, en réponse à la quantité de données des paquets de données dans la base de données étant inférieure à la capacité de base de données, d'écrire des données dans la base de données ; et
le refus, en réponse à la quantité de données des paquets de données dans la base de données n'étant pas inférieure à la capacité de base de données, d'écrire les données dans la base de données.

3. Procédé selon la revendication 1 ou 2, comprenant en outre :

la réception d'une quantité de données de téléversement configurée par un serveur de configuration, dans lequel la lecture d'un deuxième ensemble de paquets de données à partir de la file d'attente de cache, comprend :
l'utilisation de la quantité de données de téléversement comme condition limitative, pour obtenir le deuxième ensemble de paquets de données, dans lequel une quantité de données du deuxième ensemble de paquets de données n'est pas supérieure à la quantité de données de téléversement.

4. Procédé selon l'une quelconque des revendications 1 à 3, dans lequel la lecture d'un premier ensemble de paquets de données à partir de paquets de données dans la base de données, et l'ajout du premier ensemble de paquets de données à la file d'attente de cache comprend :

l'invocation, en réponse à une position libre existant dans la file d'attente de cache, d'un fil de base de données par l'intermédiaire d'un composant de signalement pour lire le premier ensemble de paquets de données à partir des paquets de données dans la base de données ; et
l'envoi du premier ensemble de paquets de données au composant de signalement par l'intermédiaire du fil de base de données, et l'ajout du premier ensemble de paquets de données à la file d'attente de cache par l'intermédiaire du composant de signalement.

5. Procédé selon la revendication 4, dans lequel l'invocation, en réponse à une position libre existant dans la file d'attente de cache, d'un fil de base de données par l'intermédiaire d'un composant de signalement pour lire le premier ensemble de paquets de données à partir des paquets de données dans la base de données comprend :

en réponse à la position libre existant dans la file d'attente de cache, l'invocation du fil de base de données par l'intermédiaire du composant de signalement, et dans le fil de base de données, le tri des paquets de données dans la base de données selon des premiers horodatages d'entreposage des paquets de données dans la base de données, pour obtenir des paquets de données triés ; et
la lecture de K paquets de données à partir des paquets de données triés, et la détermination des K paquets de données comme le premier ensemble de paquets de données, dans lequel K est un entier positif.

6. Procédé selon l'une quelconque des revendications 1 à 5, dans lequel la lecture d'un deuxième ensemble de paquets de données à partir de la file d'attente de cache, et le téléversement du deuxième ensemble de paquets de données comprend :

en réponse à des paquets de données existant dans la file d'attente de cache, la lecture de S paquets de données à partir de la file d'attente de cache dans un composant de signalement selon des positions de file d'attente des paquets de données dans la file d'attente de cache, et la détermination des S paquets de données comme le deuxième ensemble de paquets de données, dans lequel S est un entier positif ; et
le téléversement du deuxième ensemble de paquets de données sur la base d'un composant réseau.

7. Procédé selon l'une quelconque des revendications 1 à 6, dans lequel le stockage, en réponse au fait qu'un premier paquet de données du deuxième ensemble de paquets de données satisfait une première condition, du premier paquet de données dans la base de données comprend :

l'obtention, en réponse au premier paquet de données du deuxième ensemble de paquets de données satisfaisant la première condition, d'un type de données du premier paquet de données ; et

en réponse au type de données étant un type non supprimable, une quantité de paquets de données dans la base de données étant inférieure à un seuil de quantité, et le premier paquet de données n'existant pas dans la base de données, la détermination d'un horodatage actuel comme deuxième horodatage d'entreposage du premier paquet de données par l'intermédiaire d'un composant de signalement, l'envoi du premier paquet de données et du deuxième horodatage d'entreposage à un fil de base de données, et le stockage associatif du premier paquet de données et du deuxième horodatage d'entreposage dans la base de données par l'intermédiaire du fil de base de données ; et/ou

la suppression, en réponse au type de données étant un type supprimable, du premier paquet de données par l'intermédiaire du composant de signalement ;

en réponse au type de données étant le type non supprimable, la quantité de paquets de données dans la base de données étant inférieure au seuil de quantité, et le premier paquet de données existant dans la base de données, l'obtention d'un horodatage d'entreposage mis à jour du premier paquet de données par l'intermédiaire du composant de signalement, l'envoi du premier paquet de données et de l'horodatage d'entreposage mis à jour au fil de base de données, et la mise à jour du deuxième horodatage d'entreposage du premier paquet de données dans la base de données vers l'horodatage d'entreposage mis à jour par l'intermédiaire du fil de base de données ; et

la suppression, en réponse au type de données étant le type non supprimable et la quantité de paquets de données dans la base de données étant supérieure ou égale au seuil de quantité, du premier paquet de données par l'intermédiaire du composant de signalement.

8. Procédé selon l'une quelconque des revendications 1 à 7, comprenant en outre :

l'obtention de données de service téléversées par une couche de service, et l'empaquetage des données de service pour générer un troisième paquet de données (S201) ; et

l'ajout, en réponse à une position libre existant dans la file d'attente de cache, du troisième paquet de données à la file d'attente de cache par l'intermédiaire d'un composant de signalement (S202).

9. Procédé selon la revendication 8, dans lequel l'obtention de données de service téléversées par une couche de service, et l'empaquetage des données de service pour générer un troisième paquet de données (S201) comprend :

l'obtention des données de service téléversées par la couche de service dans un fil de service, et l'envoi des données de service au composant de signalement par l'intermédiaire du fil de service ; et

l'empaquetage, en réponse à une quantité de données des données de service satisfaisant une condition d'empaquetage, des données de service sur la base du composant de signalement pour générer le troisième paquet de données.

10. Procédé selon la revendication 8 ou 9, comprenant en outre :

en réponse à l'absence de position libre dans la file d'attente de cache, la détermination d'un horodatage actuel comme troisième horodatage d'entreposage du troisième paquet de données par l'intermédiaire du composant de signalement, et l'envoi du troisième paquet de données et du troisième horodatage d'entreposage à un fil de base de données (S203) ; et

le stockage associatif du troisième paquet de données et du troisième horodatage d'entreposage dans la base de données par l'intermédiaire du fil de base de données (S204).

11. Procédé selon l'une quelconque des revendications 8 à 10, comprenant en outre :

le mappage d'un fichier journal correspondant à la couche de service vers un espace d'adressage virtuel d'une mémoire de la couche de service ;

l'allocation d'un identifiant de service cible aux données de service de manière incrémentale, et l'écriture de l'identifiant de service cible dans le fichier journal ;

l'obtention d'un identifiant de service maximum et d'un identifiant de service minimum dans une période de temps cible par l'intermédiaire de l'espace d'adressage virtuel ;

l'obtention d'une quantité d'identifiants de service dédupliqués comptés par le serveur dans la période de temps cible ; et

la génération d'un taux de réussite de signalement selon l'identifiant de service maximum, l'identifiant de service minimum, et la quantité d'identifiants de service dédupliqués.

12. Procédé selon l'une quelconque des revendications 1 à 11, comprenant en outre :
en réponse au téléversement réussi du deuxième paquet de données dans le deuxième ensemble de paquets de données vers une couche d'accès, le dépaquetage du deuxième paquet de données par la couche d'accès, et la distribution de données de service qui sont obtenues par dépaquetage au serveur.

13. Dispositif informatique (1000), comprenant : un processeur (1001) et une mémoire (1005),
le processeur (1001) étant connecté à la mémoire (1005), la mémoire (1005) étant configurée pour stocker un programme informatique, et le processeur (1001) étant configuré pour invoquer le programme informatique, pour permettre au dispositif informatique (1000) d'exécuter le procédé selon l'une quelconque des revendications 1 à 12.

14. Support de stockage lisible par ordinateur, stockant un programme informatique, dans lequel le programme informatique est applicable pour être chargé et exécuté par un processeur, pour permettre à un dispositif informatique comprenant le processeur d'exécuter le procédé selon l'une quelconque des revendications 1 à 12.

FIG. 1

FIG. 2

Poll data packets in a database, to obtain a to-be-added data packet set, and add the to-be-added data packet set to a cache queue — S101

Poll the cache queue, to obtain a to-be-uploaded data packet set, and upload the to-be-uploaded data packet set — S102

If a first data packet in the to-be-uploaded data packet set meets a continuous uploading failure condition, add the first data packet to the database — S103

If a second data packet in the to-be-uploaded data packet set is successfully uploaded to a server, and the second data packet exists in the database, delete the second data packet from the database — S104

FIG. 3

Terminal system side

Service layer

↓

Reporting
component

↓

Network
component

↓

Access layer

Data
background F1 ← ↓ → Data
background F2 ● ● ● Data
background F3

Service side

## FIG. 4

Obtain target service data uploaded by a service layer, and
pack the target service data, to generate a third data packet — S201

S202 — If an idle position exists in a cache, add
the third data packet to the cache queue
through a reporting component

In response to the idle position not
existing in the cache queue, determine
a current timestamp as a third
warehousing timestamp of the third
data packet through the reporting
component, and send the third data
packet and the third warehousing
timestamp to a database thread — S203

↓ — S204

Store the third data packet and the third
warehousing timestamp that are in
association with each other in the
database through the database thread

## FIG. 5

Read data
packets from a
database    S63

Service layer    S61

Initialization

Initiate
reporting

Start polling    S62

Report
heartbeats every
W seconds    S64

Report new
data    S74

Packing    S75

A current
size is met    S76    No    Waiting for next
reporting    S77

Complete
packing

Discard    S73

Join
the cache
queue    S71    The cache
queue is full    Write into the
database    S72    Database exceeds
a quantity threshold

No

Exceed a
count threshold    S70    Yes

Polling

Read K pieces of data
from the database by
each polling and add
the K pieces of data
to a cache queue    S65

Delete
what
has been
stored

Traversing the
cache queue    S66    Network
has
been
connected    Take out data from the
cache queue and upload
the data through a
network component    S67    Uploading
fails    S68

Uploading
succeeds    S69

FIG. 6

FIG. 7

FIG. 8

**EP 4 407 957 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111694766 A
- CN 110493116 A